(19) Europäisches Patentamt
European Patent Office
Office européen des brevets

(11) **EP 4 075 749 B1**

(12) **EUROPEAN PATENT SPECIFICATION**

(45) Date of publication and mention
of the grant of the patent:
**13.08.2025 Bulletin 2025/33**

(21) Application number: **21775024.9**

(22) Date of filing: **20.01.2021**

(51) International Patent Classification (IPC):
*H04L 43/0876* (2022.01)    *H04L 43/12* (2022.01)
*H04L 47/215* (2022.01)    *H04L 43/026* (2022.01)
*H04L 47/21* (2022.01)    *H04L 9/40* (2022.01)

(52) Cooperative Patent Classification (CPC):
**H04L 43/026; H04L 47/21; H04L 47/215;**
**H04L 63/1425;** H04L 43/0876; H04L 43/12

(86) International application number:
**PCT/CN2021/072863**

(87) International publication number:
**WO 2021/190111 (30.09.2021 Gazette 2021/39)**

(54) **DETECTION METHOD AND DETECTION DEVICE FOR HEAVY FLOW DATA STREAM**

DETEKTIONSVERFAHREN UND DETEKTIONSVORRICHTUNG FÜR EINEN
SCHWERFLUSS-DATENSTROM

PROCÉDÉ DE DÉTECTION ET DISPOSITIF DE DÉTECTION POUR FLUX DE DONNÉES À FORT
DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2020 CN 202010225423**

(43) Date of publication of application:
**19.10.2022 Bulletin 2022/42**

(73) Proprietor: HUAWEI TECHNOLOGIES CO., LTD.
**Shenzhen, Guangdong 518129 (CN)**

(72) Inventors:
• **ZHANG, Xi**
**Shenzhen, Guangdong 518129 (CN)**
• **PAN, Lujia**
**Shenzhen, Guangdong 518129 (CN)**
• **TANG, Lu**
**Shatin, Hong Kong (CN)**
• **LEE, Pak-Ching**
**Shatin, Hong Kong (CN)**

(74) Representative: **Maiwald GmbH**
**Elisenhof**
**Elisenstraße 3**
**80335 München (DE)**

(56) References cited:
WO-A1-2020/019270    CN-A- 106 452 941
CN-A- 107 566 206    CN-A- 110 011 876
US-A1- 2009 006 607    US-A1- 2015 319 069
US-A1- 2016 261 507    US-A1- 2018 367 431
US-A1- 2019 068 623

## Description

### TECHNICAL FIELD

This application relates to the field of information technologies, and more specifically, to a heavy flow detection method and detection apparatus.

### BACKGROUND

WO2020/019270A1 describes a method, device, and system for network traffic analysis. It is described that the method comprises obtaining traffic data of current time interval, recording the traffic data in a Chinese Remainder Theorem based Reversible Sketch (CRT-RS) based on a hash operation comprising Modulo operations, detecting abnormal buckets in the CRT-RS based on a change between the traffic data of current time interval and traffic data of previous time interval, and recovering abnormal source address associated information based on the abnormal buckets, wherein the modulus of the Modulo operations are selected from the modulus in Chinese Remainder Theorem (CRT) as pairwise coprime integers and the CRT-RS includes a plurality of buckets. It is described that the step of detecting uses a Modified Multi-chart Cumulative Sum.

With rapid development of mobile networks, traffic in the networks increases explosively. As a result, exceptions frequently occur in the networks, and further increases network maintenance costs. How to quickly and exhaustively detect abnormal traffic in a network becomes essential.

Two types of abnormal traffic are particularly noteworthy in detection of abnormal network traffic. One type is a flow whose traffic volume is large, also referred to as a heavy hitter (heavy hitter); and the other type is a flow whose traffic volume changes greatly within a specific period of time, also referred to as a heavy changer (heavy changer). These two types of flows are collectively referred to as a heavy flow (heavy flow).

Currently, in most cases of heavy flow detection, a plurality of two-dimensional tables are deployed on a data collection device in a network, and the two-dimensional tables are used to store information about all flows obtained by the data collection device, to detect an abnormal flow for the single data collection device. However, a flow in the network may be distributed on a plurality of data collection devices, and some heavy flows may be missed in abnormal-flow detection performed by using only a single data collection device. For example, a flow discovered in detection by a single data collection device may be small, but a flow obtained by combining flows in many data collection devices may turn into a heavy flow of a network-wide level. Therefore, how to detect a heavy flow of the network-wide level becomes an urgent problem to be resolved.

### SUMMARY

This application provides a heavy flow detection method and detection apparatus to detect a heavy flow of a network-wide level, and increase precision of heavy flow detection.

Appended claim 1 defines a heavy flow detection method. Appended claim 7 defines a heavy flow detection apparatus. Appended claim 10 defines a heavy flow detection apparatus. Appended claims 11 defines a computer storage medium. The invention and its scope of protection is defined by these claims. The following aspects and implementations of the disclosure provide examples of combinations of technical subject matters.

According to a first aspect, a heavy flow detection method is provided, including: A detection apparatus obtains two-dimensional data structures in a plurality of data collection devices, where each of the two-dimensional data structures is used to store information about a flow in a network that is obtained by a corresponding data collection device; the detection apparatus performs combination processing on the two-dimensional data structures in the plurality of data collection devices to obtain a combined two-dimensional data structure; and the detection apparatus detects a heavy flow based on the combined two-dimensional data structure, where the heavy flow is a heavy flow of a network-wide level in the network.

Any one of the two-dimensional data structures in the plurality of data collection devices may be used to store information about a flow in the network that is obtained by one of the plurality of data collection devices. For example, the information about the flow may include a key value of the obtained flow in the network, a size of the flow, and other information.

It should be noted that, the two-dimensional data structure in any one of the plurality of data collection devices is used to store information about a flow in the network that is obtained by the data collection device. To be specific, the two-dimensional data structure in the data collection device may be used to detect a heavy flow of a single-point device level, that is, a heavy flow passing through a single data collection device. The combined two-dimensional data structure may be used to detect a heavy flow of the network-wide level in the network. That is, a flow detected by a data collection device may not be a heavy flow, but a flow obtained by combining flows in many data collection devices may be detected as a heavy flow. In this case, the heavy flow is a heavy flow of the network-wide level.

A heavy flow is a general term for heavy hitter (heavy hitter) and heavy changer (heavy changer). The heavy hitter refers to a flow whose value in a unit of a packet quantity, a byte quantity, a connection quantity, or the like exceeds an expectation, that is, exceeds a specific threshold. The heavy changer refers to a flow whose value in a unit of a packet quantity, a byte quantity, a connection quantity, or the like changes dramatically within a short period of time.

It should be understood that, the two-dimensional data structure on each of the foregoing data collection devices may be used to record the information about the flow obtained by the data collection device, that is, by a single-point device. However, a flow of the network-wide level, namely, a flow passing through a plurality of single-point devices, cannot be detected. In the embodiments of this application, the data structure obtained by performing combination processing on the data structures in the plurality of data collection devices may be used to detect a flow of the network-wide level, to avoid a problem of missing a heavy flow of the network-wide level in detection.

Optionally, the detection apparatus may detect a heavy flow in the network based on a given key value of a flow and the combined two-dimensional data structure, to estimate a total traffic volume or a change amount of the flow with the given key value.

Optionally, the detection apparatus may sequentially poll flows based on a key value in each bucket in the combined two-dimensional data structure, to query a total traffic volume of each flow or a change amount of each flow.

Based on the technical solution of this application, the detection apparatus obtains the two-dimensional data structures in the plurality of data collection devices, where any two-dimensional data structure is used to store information about a flow in the network that is obtained by a corresponding data collection device; the detection apparatus may perform combination processing on the two-dimensional data structures in the plurality of data collection devices to obtain the combined two-dimensional data structure; and the detection apparatus may detect a heavy flow based on the combined two-dimensional data structure, where the heavy flow is a heavy flow of the network-wide level in the network. That is, the heavy flow detection method according to the embodiments of this application can avoid missing a heavy flow of the network-wide level in detection, and detect the heavy flow of the network-wide level, thereby increasing precision of heavy flow detection.

In a possible implementation, the two-dimensional data structure is a data structure formed by a plurality of buckets, and that the detection apparatus performs combination processing on the two-dimensional data structures in the plurality of data collection devices to obtain a combined two-dimensional data structure includes:
the detection apparatus performs combination processing on buckets at a same location in the two-dimensional data structures in the plurality of data collection devices to obtain the combined two-dimensional data structure.

It should be noted that, the two-dimensional data structure may include d rows, and each row includes w buckets. The plurality of two-dimensional data structures may have a same structure, that is, each of the plurality of two-dimensional data structures has a same quantity of rows, and each row includes a same quantity of buckets. Performing combination processing on the plurality of two-dimensional data structures may be performing combination processing on the buckets at the same location in the plurality of data structures. The same location may be a bucket located in the $i^{th}$ row and the $j^{th}$ column in the plurality of two-dimensional data structures.

In a possible implementation, any bucket in the two-dimensional data structures in the plurality of data collection devices includes a data traffic flow sum in the current bucket, a key value of a majority flow in the current bucket, and a counter value of the majority flow; and any bucket in the combined two-dimensional data structure includes an updated data traffic flow sum, a key value of an updated majority flow, and a counter value of the updated majority flow, where the any bucket includes a bucket at a first location; and
that the detection apparatus performs combination processing on buckets at a same location in the two-dimensional data structures in the plurality of data collection devices to obtain the combined two-dimensional data structure includes:

adding up the data traffic flow sums in the buckets at the first location in the two-dimensional data structures in the plurality of data collection devices to obtain the updated data traffic flow sum in the bucket at the first location;

comparing traffic volumes of the majority flows in the buckets at the first location in the two-dimensional data structures in the plurality of data collection devices to obtain the key value of the updated majority flow in the bucket at the first location; and

obtaining the counter value of the updated majority flow in the bucket at the first location by using the key value of the updated majority flow and a traffic volume of the majority flow.

Based on the technical solution implemented in this application, the combination processing performed on the two-dimensional data structures in the plurality of data collection devices is not simply adding up feature values in the buckets in the plurality of two-dimensional data structures. When flow information stored in a bucket is updated, comparison with flow information stored in a bucket at a same location in another two-dimensional data structure needs to be performed, and then proper estimation needs to be implemented to determine a majority flow in each bucket obtained after the combination processing. A method for performing combination processing on the two-dimensional data structures in the plurality of data collection devices according to the embodiments of this application can reduce a memory demand and save resources.

In a possible implementation, the two-dimensional data structures in the plurality of data collection devices are N two-dimensional data structures, and the key values of the majority flows corresponding to the buckets at the first location in the N two-dimensional data structures are X key values, where X is a positive integer less than or equal to N; and

the comparing total traffic volumes of the majority flows in the buckets at the first location in the two-dimensional data structures in the plurality of data collection devices to obtain the key value of the updated majority flow in the bucket at the first location includes:

> determining that the traffic volumes of the majority flows in the buckets at the first location in the N two-dimensional data structures are estimated values of total traffic volumes of flows corresponding to any one of the X key values; and
> determining that a flow having a maximum total traffic volume in the flows corresponding to the any one of the X key values is the updated majority flow.

In a possible implementation, a first key value is any one of the X key values; and an estimated value of the traffic volume of the majority flow in the bucket at the first location in an $i^{th}$ two-dimensional data structure in the N two-dimensional data structures is obtained based on the following formula:

> if the key value of the majority flow in the bucket at the first location in the $i^{th}$ two-dimensional data structure is the first key value, an estimated value of a traffic volume of a flow corresponding to the first key value is $S_i(x)=(V_i+C_i)/2$; or
> if the key value of the majority flow in the bucket at the first location in the $i^{th}$ two-dimensional data structure is not the first key value, an estimated value of a traffic volume of a flow corresponding to the first key value is $S_i(x)=(V_i-C_i)/2$; where
> $S_i(x)$ represents the estimated value of the traffic volume of the flow corresponding to the first key value; $X$ represents the first key value, and $V_i$ represents a traffic flow sum of all flows in the bucket at the first location in the $i^{th}$ two-dimensional data structure; and $C_i$ represents the counter value of the majority flow in the bucket at the first location in the $i^{th}$ two-dimensional data structure.

In a possible implementation, that a detection apparatus obtains two-dimensional data structures in a plurality of data collection devices includes:

> the detection apparatus obtains the two-dimensional data structures in the plurality of data collection devices at an end moment of each time period; and
> that the detection apparatus detects a heavy flow based on the combined two-dimensional data structure includes:
> if the detection apparatus detects, based on the combined two-dimensional data structure, that a change value of a first flow between any two time periods is greater than a first threshold, determining that the first flow is the heavy flow.

Optionally, the detection apparatus may periodically obtain the two-dimensional data structures in the plurality of data collection devices. To be specific, the data collection devices may periodically send, to the detection apparatus, the data structures used to record flow information. A value of the period may be a preset time interval.

In a possible implementation, that the detection apparatus detects a heavy flow based on the combined two-dimensional data structure includes:

if the detection apparatus detects, based on the combined two-dimensional data structure, that a total traffic volume of a first flow is greater than a second threshold, determining that the first flow is the heavy flow.

In a possible implementation, the two-dimensional data structure includes a majority vote data structure MV-Sketch.

Optionally, the two-dimensional data structure may be an MV-Sketch, and each bucket in the MV-Sketch may include three feature values: a total flow size stored in the current bucket, namely, $V_{i,j}$; a key value of a majority flow in the current bucket, namely, $K_{i,j}$, where the key value may represent an identifier of the majority flow, and the majority flow refers to a flow whose flow size exceeds 50% of total traffic mapped to the current bucket; and a counter value of the majority flow in the current bucket, namely, $C_{i,j}$.

According to a second aspect, a heavy flow detection apparatus is provided, including: an obtaining unit, configured to obtain two-dimensional data structures in a plurality of data collection devices, where each of the two-dimensional data structures is used to store information about a flow in a network that is obtained by a corresponding data collection device; and a processing unit, configured to perform combination processing on the two-dimensional data structures in the plurality of data collection devices to obtain a combined two-dimensional data structure; and detect a heavy flow based on the combined two-dimensional data structure, where the heavy flow is a heavy flow of a network-wide level in the network.

Any one of the two-dimensional data structures in the plurality of data collection devices may be used to store information about a flow in the network that is obtained by one of the plurality of data collection devices. For example, the information about the flow may include a key value of the obtained flow in the network, a size of the flow, and other information.

It should be noted that, the two-dimensional data structure in any one of the plurality of data collection devices is used to store information about a flow in the network that is obtained by the data collection device. To be specific, the two-dimensional data structure in the data collection device may be used to detect a heavy flow of a single-point device level, that is, a heavy flow passing through a single data collection device. The combined two-dimensional data structure may be used to detect a heavy flow of the network-wide level in the network. A flow detected by a data collection device may be not a heavy flow, but a flow obtained by combining flows in many data collection devices may be detected as a heavy flow. In this case, the heavy flow is a heavy flow of the network-wide level.

A heavy flow is a general term for heavy hitter (heavy hitter) and heavy changer (heavy changer). The heavy hitter refers to a flow whose value in a unit of a packet quantity, a byte quantity, a connection quantity, or the like exceeds an expectation, that is, exceeds a specific threshold. The heavy changer refers to a flow whose value in a unit of a packet quantity, a byte quantity, a connection quantity, or the like changes dramatically within a short period of time.

It should be understood that, the two-dimensional data structure on each of the foregoing data collection devices may be used to record the information about the flow obtained by the data collection device, that is, by a single-point device. However, a flow of the network-wide level, namely, a flow passing through a plurality of single-point devices, cannot be detected. In the embodiments of this application, the data structure obtained by performing combination processing on the data structures in the plurality of data collection devices may be used to detect a flow of the network-wide level, to avoid a problem of missing a heavy flow of the network-wide level in detection.

Optionally, the detection apparatus may detect a heavy flow based on a given key value of a flow and the combined two-dimensional data structure, to estimate a total traffic volume or a change amount of the flow with the given key value.

Optionally, the detection apparatus may sequentially poll flows based on a key value in each bucket in the combined two-dimensional data structure, to query a total traffic volume of each flow or a change amount of each flow.

Based on the technical solution of this application, the detection apparatus may obtain the two-dimensional data structures in the plurality of data collection devices, where any two-dimensional data structure is used to store information about a flow in the network that is obtained by a corresponding data collection device; the detection apparatus may perform combination processing on the two-dimensional data structures in the plurality of data collection devices to obtain the combined two-dimensional data structure; and the detection apparatus may detect a heavy flow based on the combined two-dimensional data structure, where the heavy flow may be a heavy flow of the network-wide level in the network. That is, the heavy flow detection apparatus according to the embodiments of this application can avoid missing a heavy flow of the network-wide level in detection, and detect the heavy flow of the network-wide level, thereby increasing precision of heavy flow detection.

In a possible implementation, the two-dimensional data structure is a data structure formed by a plurality of buckets, and the processing unit is specifically configured to:

perform combination processing on buckets at a same location in the two-dimensional data structures in the plurality of data collection devices to obtain the combined two-dimensional data structure.

It should be noted that, the two-dimensional data structure may include d rows, and each row includes w buckets. The plurality of two-dimensional data structures may have a same structure, that is, each of the plurality of two-dimensional data structures has a same quantity of rows, and each row includes a same quantity of buckets. Performing combination processing on the plurality of two-dimensional data structures may be performing combination processing on the buckets at the same location in the plurality of data structures. The same location may be a bucket located in the $i^{th}$ row and the $j^{th}$ column in the plurality of two-dimensional data structures.

In a possible implementation, any bucket in the two-dimensional data structures in the plurality of data collection devices includes a data traffic flow sum in the current bucket, a key value of a majority flow in the current bucket, and a counter value of the majority flow; and any bucket in the combined two-dimensional data structure includes an updated data traffic flow sum, a key value of an updated majority flow, and a counter value of the updated majority flow, where the any bucket includes a bucket at a first location; and the processing unit is specifically configured to:

add up the data traffic flow sums in the buckets at the first location in the two-dimensional data structures in the plurality of data collection devices to obtain the updated data traffic flow sum in the bucket at the first location;

compare traffic volumes of the majority flows in the buckets at the first location in the plurality of two-dimensional data structures to obtain the key value of the updated majority flow in the bucket at the first location; and

obtain the counter value of the updated majority flow in the bucket at the first location by using the key value of the updated majority flow and a traffic volume of the majority flow.

Based on the technical solution implemented in this application, the combination processing performed on the two-dimensional data structures in the plurality of data collection devices is not simply adding up feature values in the buckets in the plurality of two-dimensional data structures. When flow information stored in a bucket is updated, comparison with a flow stored in a bucket at a same location in another two-dimensional data structure needs to be performed, and then proper estimation needs to be implemented to determine a majority flow in each bucket obtained after the combination processing. A method for performing combination processing on the two-dimensional data structures in the plurality of data collection devices according to the embodiments of this application can reduce a memory demand and save resources.

In a possible implementation, the two-dimensional data structures in the plurality of data collection devices are N two-dimensional data structures, and the key values of the majority flows corresponding to the buckets at the first location in the N two-dimensional data structures are X key values, where X is a positive integer less than or equal to N; and

the processing unit is specifically configured to:

determine that the traffic volumes of the majority flows in the buckets at the first location in the N two-dimensional data structures are estimated values of traffic volumes of flows corresponding to any one of the X key values; and
determine that a flow having a maximum traffic volume in the flows corresponding to the any one of the X key values is the updated majority flow.

In a possible implementation, a first key value is any one of the X key values; and an estimated value of the traffic volume of the majority flow in the bucket at the first location in an $i^{th}$ two-dimensional data structure in the N two-dimensional data structures is obtained based on the following formula:

if the key value of the majority flow in the bucket at the first location in the $i^{th}$ two-dimensional data structure is the first key value, an estimated value of a traffic volume of a flow corresponding to the first key value is $S_i(x)=(V_i+C_i)/2$; or
if the key value of the majority flow in the bucket at the first location in the $i^{th}$ two-dimensional data structure is not the first key value, an estimated value of a traffic volume of a flow corresponding to the first key value is $S_i(x)=(V_i-C_i)/2$; where
$S_i(x)$ represents the estimated value of the traffic volume of the flow corresponding to the first key value; $X$ represents the first key value, and $V_i$ represents a traffic flow sum of all flows in the bucket at the first location in the $i^{th}$ two-dimensional data structure; and $C_i$ represents the counter value of the majority flow in the bucket at the first location in the $i^{th}$ two-dimensional data structure.

In a possible implementation, the obtaining unit is specifically configured to: obtain the two-dimensional data structures in the plurality of data collection devices at an end moment of each time period; and
the processing unit is specifically configured to:
if it is detected, based on the combined two-dimensional data structure, that a change value of a first flow between any two time periods is greater than a first threshold, determine that the first flow is the heavy flow.

Optionally, the detection apparatus may periodically obtain the two-dimensional data structures in the plurality of data collection devices. To be specific, the plurality of data collection devices may periodically send, to the detection apparatus, the data structures used to record flow information. A value of the period may be a preset time interval.

In a possible implementation, the processing unit is specifically configured to: if it is detected, based on the combined two-dimensional data structure, that a total traffic volume of a first flow is greater than a second threshold, determine that the first flow is the heavy flow.

In a possible implementation, the two-dimensional data structure includes a majority vote data structure MV-Sketch.

Optionally, the two-dimensional data structure may be an MV-Sketch, and each bucket in the MV-Sketch may include three feature values: a total flow size stored in the current bucket, namely, $V_{i,j}$; a key value of a majority flow in the current bucket, namely, $K_{i,j}$, where the key value may represent an identifier of the majority flow, and the majority flow refers to a flow whose flow size exceeds 50% of total traffic mapped to the current bucket; and a counter value of the majority flow in the current bucket, namely, $C_{i,j}$.

According to a third aspect, a heavy flow detection apparatus is provided, where the detection apparatus includes: a memory, configured to store a program; and a processor, configured to execute the program stored in the memory, and when the program stored in the memory is executed, the processor is configured to perform the detection method according to any one of the first aspect or the implementations of the first aspect.

It should be understood that, an extension, limitation, explanation, and description of related content in the first aspect are also applicable to same content in the third aspect.

According to a fourth aspect, a computer storage medium is provided. The computer storage medium stores program code, and the program code includes an instruction used to perform a step in the detection method according to any one of the first aspect or the implementations of the first aspect.

The foregoing storage medium may be specifically a non-volatile storage medium.

According to a fifth aspect, a chip is provided, where the chip includes a processor and a data interface, and the processor reads, by using the data interface, an instruction stored in a memory to perform the detection method according to any one of the first aspect or the implementations of the first aspect.

Optionally, in an implementation, the chip may further include a memory, the memory stores an instruction, and the processor is configured to execute the instruction stored in the memory. When the instruction is executed, the processor is configured to perform the detection method according to any one of the first aspect or the implementations of the first aspect.

The chip may be specifically a field programmable gate array FPGA or an application-specific integrated circuit ASIC.

## BRIEF DESCRIPTION OF DRAWINGS

FIG. 1 is a schematic diagram of a two-dimensional data structure according to an embodiment of this application;

FIG. 2 is a schematic diagram of an application scenario according to an embodiment of this application;

FIG. 3 is a schematic diagram of a system architecture according to an embodiment of this application;

FIG. 4 is a schematic flowchart of a heavy flow detection method according to an embodiment of this application;

FIG. 5 is a schematic flowchart of a heavy flow detection method according to an embodiment of this application;

FIG. 6 is a schematic diagram of performing combination processing on a plurality of two-dimensional data structures according to an embodiment of this application;

FIG. 7 is a schematic diagram of a detection result on an open network traffic data set according to an embodiment of this application;

FIG. 8 is a schematic diagram of a detection result on an open network traffic data set according to an embodiment of this application;

FIG. 9 is a schematic block diagram of a detection apparatus according to an embodiment of this application; and

FIG. 10 is a schematic block diagram of a detection apparatus according to an embodiment of this application.

## DESCRIPTION OF EMBODIMENTS

The following describes the technical solutions in the embodiments of this application with reference to the accompanying drawings in the embodiments of this application. It is clear that, the described embodiments are merely a part rather than all of the embodiments of this application. All other embodiments obtained by a person of ordinary skill in the art based on the embodiments of this application without creative efforts shall fall within the protection scope of this application.

It should be understood that, in the embodiments of this application, "first", "second", "third", and the like are merely used to refer to different objects, and do not mean that other limitations are imposed on the referred objects.

To better understand a flow detection method in the embodiments of this application, the following first briefly describes some related basic concepts.

### 1. Heavy flow (heavy flow)

A heavy flow is a general term for heavy hitter (heavy hitter) and heavy changer (heavy changer). The heavy hitter refers to a flow whose value in a unit of a packet quantity, a byte quantity, a connection quantity, or the like exceeds an expectation, that is, exceeds a specific threshold. The heavy changer refers to a flow whose value in a unit of a packet quantity, a byte quantity, a connection quantity, or the like changes dramatically within a short period of time.

### 2. Sketch (sketch)

Generally, a sketch refers to a data structure of a two-dimensional table, which includes several rows, and each row includes several buckets (bucket).

For example, in an MV-Sketch, each bucket may include three elements: total traffic in the current bucket, a key value of a majority flow in the current bucket, and a total traffic counter of the majority flow in the current bucket. The majority flow refers to a flow whose flow size exceeds 50% of total traffic mapped to the current bucket.

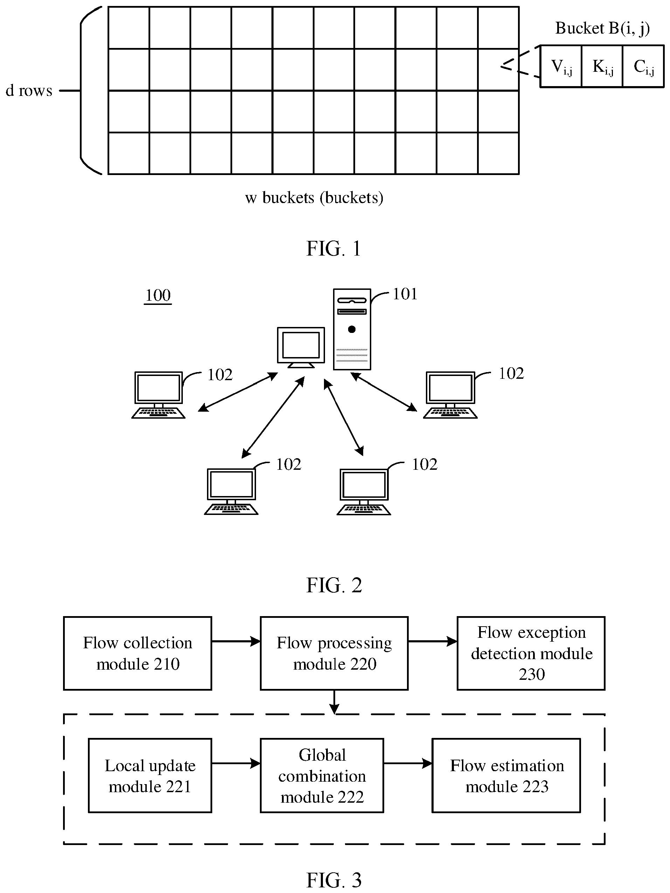

For example, FIG. 1 is a schematic diagram of an MV-Sketch. FIG. 1 shows a two-dimensional data structure of d×w. The two-dimensional data structure includes d rows, each row includes w buckets (bucket), and each bucket includes three elements.

For example, the $j^{th}$ bucket B(i, j) in the $i^{th}$ row is used as an example for description. B(i, j) includes $V_{i,j}$, $K_{i,j}$ and $C_{i,j}$. $V_{i,j}$ represents total traffic of all flows in the current bucket. $K_{i,j}$ represents a key value of a majority flow in the current bucket, that is, an identifier of the majority flow. The majority flow refers to a flow whose flow size exceeds 50% of total traffic mapped to the current bucket. The counter $C_{i,j}$ is used to perform counting for total traffic of the majority flow in the bucket.

For example, in an LD-Sketch, each bucket may include four elements: total traffic in the current bucket, a maximum traffic estimation error in the current bucket, a queue (which records estimated values of traffic of some objects in the bucket), and a length of the supplementary queue.

At present, with rapid development of a communications network, flows in the network increase explosively. As a result, exceptions frequently occur in the networks. Two types of abnormal traffic are particularly noteworthy in detection of abnormal network traffic. One type is a flow whose traffic volume is large, also referred to as a heavy hitter (heavy hitter); and the other type is a flow whose traffic volume changes greatly within a specific period of time, also referred to as a heavy changer (heavy changer). These two types of flows are collectively referred to as a heavy flow (heavy flow). Currently, in most algorithms for heavy flow detection, a plurality of two-dimensional tables are deployed on a specific data collection device in a network, and the two-dimensional tables are used to store information about all flows, to detect an abnormal flow. However, a flow in the network may be distributed on a plurality of devices, and performing abnormal-flow detection by using a single device may only detect a heavy flow on the single device. A single device may have a small flow, but flows in many single devices may be combined to form a heavy flow. In this case, a flow may be missed in detection.

In view of this, this application proposes a heavy flow detection method: A detection apparatus obtains two-dimensional data structures in a plurality of data collection devices, where any two-dimensional data structure is used to store information about a flow in a network that is obtained by a corresponding data collection device; the detection apparatus may perform combination processing on the two-dimensional data structures in the plurality of data collection devices to obtain a combined two-dimensional data structure; and the detection apparatus may detect a heavy flow based on the combined two-dimensional data structure, where the heavy flow is a heavy flow of a network-wide level in the network. That is, the heavy flow detection method according to the embodiments of this application can avoid missing a heavy flow of the network-wide level in detection, and detect the heavy flow of the network-wide level, thereby increasing precision of heavy flow detection.

The following describes in detail the embodiments of this application with reference to specific examples. It should be noted that this is merely intended to help a person skilled in the art better understand the embodiments of this application, but is not intended to limit the scope of the embodiments of this application.

FIG. 2 is a schematic diagram of an application scenario according to an embodiment of this application.

As shown in FIG. 2, a system 100 may include a detection apparatus 101 and a plurality of data collection devices (for example, single-point devices through which a flow passes) 102. The detection apparatus 101 may be configured to obtain two-dimensional data structures in the plurality of data collection devices 102 in the system at an end of a preset time period, and perform flow detection, to detect a heavy flow of the network-wide level .

The data collection device 102 may be any device for obtaining a flow, for example, a gateway or another network flow collection device, and may include any computing device known in the prior art, such as a server or a desktop computer.

The data collection device 102 may include a memory and a processor. The memory may be configured to store program code, for example, an operating system and another application program. The processor may be configured to invoke the program code stored in the memory to implement a corresponding function of the node. The processor and the memory included in the node may be implemented by using a chip. This is not specifically limited herein.

The detection apparatus 101 may periodically obtain, from the data collection devices 102, the two-dimensional data structures used to record flows, to determine a traffic volume of a flow passing through each data collection device 102 in the network.

FIG. 3 is a schematic diagram of a system architecture according to an embodiment of this application.

For example, a system architecture for a flow detection method provided in this embodiment of this application may include a flow collection module 210, a flow processing module 220, and a flow exception detection module 230. The flow processing module 220 may further include a local update module 221, a global combination module 222, and a data traffic estimation module 223.

The flow collection module 210 is configured to collect traffic from a gateway or another network flow collection device, and extract a 5-tuple feature (a source address, a source port, a destination address, a destination port, and a protocol) of a flow and a size of the flow. The 5-tuple feature is used to uniquely identify the flow.

The flow processing module 220 is configured to deploy a two-dimensional data structure at each gateway (for example, a data collection device), and store the collected flow in the two-dimensional data structure through mapping, for example, store the flow in the two-dimensional data structure through mapping by using a majority vote algorithm; and then, combine the two-dimensional data structures in the plurality of data collection devices to obtain a flow traffic flow sum to be queried in an estimation table, for subsequently detecting an abnormal status of a flow in the entire network.

For example, the flow processing module 220 may further include the local update module 221, the global combination module 222, and the data traffic estimation module 223.

The local update module 221 is configured to map, by using a hash function, a flow to the two-dimensional data structure deployed on each data collection device, and create a hash index for the flow. Each grid (bucket) in the two-dimensional data structure may include an identifier value of the flow, a sum of sizes of all flows mapped to the grid, and a counter.

The global combination module 222 is configured to perform combination processing on the two-dimensional data structures in all the data collection devices, to collect statistics on flows in the entire network.

It should be noted that, for a same flow passing through different data collection devices, the flow may have different mapping locations in two-dimensional data structures in the different data collection devices. Therefore, performing combination processing on the two-dimensional data structures in the different data collection devices is not simply adding up flows in all grids at a same location. For flows in a grid, to update a key value, a sum of sizes of all flows in the grid, and a counter, comparison with data in a grid in a two-dimensional data structures in another data collection device needs to be performed and proper estimation needs to be implemented.

The data traffic estimation module 223 is configured to detect a flow of a network-wide level, where a size of a two-dimensional data structure is usually estimated, and therefore a plurality of flows may be mapped to a same grid; and estimate a total size of a flow in the entire network by comparing key values in all grids, to facilitate exception detection in a next step.

The flow exception detection module 230 is configured to perform exception detection at an end of each time period based on an estimated value of a flow, and determine whether a flow has an abnormal value. The time period may be a preset time interval.

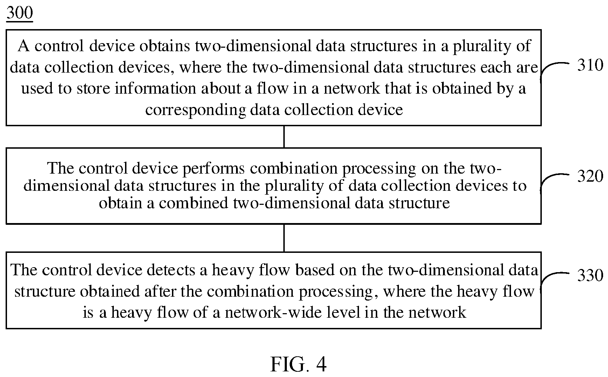

With reference to FIG. 4, the following specifically describes the flow detection method in the system that includes the detection apparatus and the data collection devices in this embodiment of this application.

FIG. 4 is a schematic flowchart of a heavy flow detection method according to an embodiment of this application. A data collection device may be any one of the plurality of data collection devices in the system, for example, may be any data collection device in FIG. 2.

In this embodiment of this application, the system may include a plurality of data collection devices and one detection apparatus. The detection apparatus processes two-dimensional data structures that are provided by the plurality of data collection devices and that are used to map flows, to obtain a detection result of a flow of a network-wide level.

Step 310: The detection apparatus may obtain the two-dimensional data structures in the plurality of data collection devices.

Each of the two-dimensional data structures is used to store information about a flow in a network that is obtained by a corresponding data collection device.

It should be understood that, any one of the two-dimensional data structures in the plurality of data collection devices may be used to store information about a flow in the network that is obtained by one of the plurality of data collection devices. For example, the information about the flow may include a key value of the obtained flow in the network, a size of the flow, and other information.

It should be further understood that, the network may refer to any object to be detected, it may include one or more devices.

Optionally, in a possible implementation, the detection apparatus may periodically obtain the two-dimensional data structures in the plurality of data collection devices.

For example, the plurality of data collection devices may send the two-dimensional data structures in the data collection devices to the detection apparatus at an end moment of each time period. The time period may be a preset time interval.

Step 320: The detection apparatus performs combination processing on the two-dimensional data structures in the plurality of data collection devices to obtain a combined two-dimensional data structure.

The two-dimensional data structure obtained after the combination processing may be used to store information about a flow in the network.

Optionally, in a possible implementation, the two-dimensional data structure is a data structure formed by a plurality of buckets, and that the detection apparatus performs combination processing on the two-dimensional data structures in the plurality of data collection devices to obtain a combined two-dimensional data structure may include: the detection apparatus performs combination processing on buckets at a same location in the two-dimensional data structures in the plurality of data collection devices to obtain the combined two-dimensional data structure.

For example, the two-dimensional data structure may be shown in FIG. 1. The two-dimensional data structure shown in FIG. 1 includes d rows, and each row includes w buckets. The plurality of two-dimensional data structures may have a same structure, that is, each of the plurality of two-dimensional data structures has a same quantity of rows, and each row includes a same quantity of buckets. Performing combination processing on the plurality of two-dimensional data structures may be performing combination processing on the buckets at the same location in the plurality of data structures.

For example, as shown in FIG. 1, the two-dimensional data structure may be an MV-Sketch, and each bucket in the MV-Sketch may include three feature values: a total flow size stored in the current bucket, namely, $V_{i,j}$; a key value of a majority flow in the current bucket, namely, $K_{i,j}$, where the key value may represent an identifier of the majority flow, and the majority flow refers to a flow whose flow size exceeds 50% of total traffic mapped to the current bucket; and a counter value of the majority flow in the current bucket, namely, $C_{i,j}$. To perform combination processing on the plurality of two-dimensional data structures, the feature values in each bucket need to be updated. That is, any bucket in the combined two-dimensional data structure includes three feature values: an updated data traffic flow sum, a key value of an updated majority flow, and a counter value of the updated majority flow.

Optionally, in a possible implementation, a process of performing combination processing on buckets at a first location in the two-dimensional data structures in the plurality of data collection devices may include: adding up the data traffic flow sums in the buckets at the first location in the two-dimensional data structures in the plurality of data collection devices to obtain the updated data traffic flow sum in the bucket at the first location; comparing traffic volumes of the majority flows in the buckets at the first location in the two-dimensional data structures in the plurality of data collection devices to obtain the key value of the updated majority flow in the bucket at the first location; and obtaining the counter value of the updated majority flow in the bucket at the first location by using the key value of the updated majority flow and a traffic volume of the majority flow.

It should be understood that, in this embodiment of this application, the foregoing combination processing algorithm does not simply add up the feature values in the buckets in the two-dimensional data structures in the plurality of data collection devices. When flow information stored in a bucket is updated, comparison with a flow stored in a bucket at a same location in another two-dimensional data structure needs to be performed, and then proper estimation needs to be implemented to determine a majority flow in each bucket obtained after the combination processing. A method for performing combination processing on the two-dimensional data structures in the plurality of data collection devices according to this embodiment of this application can reduce a memory demand and save resources.

Optionally, in a possible implementation, the two-dimensional data structures in the plurality of data collection devices are N two-dimensional data structures, and the key values of the majority flows corresponding to the buckets at the first location in the N two-dimensional data structures are X key values, where X is a positive integer less than or equal to N; and the comparing traffic volumes of the majority flows in the buckets at the first location in the two-dimensional data structures in the plurality of data collection devices to obtain the key value of the updated majority flow in the bucket at the first location includes: determining that the traffic volumes of the majority flows in the buckets at the first location in the N two-dimensional data structures are estimated values of traffic volumes of flows corresponding to any one of the X key values; and determining that a flow having a maximum traffic volume in the flows corresponding to the any one of the X key values is the updated majority flow.

For example, a first key value is any one of the X key values; and an estimated value of the traffic volume of the majority flow in the bucket at the first location in an $i^{th}$ two-dimensional data structure in the N two-dimensional data structures is obtained based on the following formula:

if the key value of the majority flow in the bucket at the first location in the $i^{th}$ two-dimensional data structure is the first key value, an estimated value of a traffic volume of a flow corresponding to the first key value is $S_i(x)=(V_i-C_i)/2$; or
if the key value of the majority flow in the bucket at the first location in the $i^{th}$ two-dimensional data structure is not the first key value, an estimated value of a traffic volume of a flow corresponding to the first key value is $S_i(x)=(V_i-C_i)/2$; where
$S_i(x)$ represents the estimated value of the traffic volume of the flow corresponding to the first key value; X represents the first key value, and $V_i$ represents a traffic flow sum of all flows in the bucket at the first location in the $i^{th}$ two-dimensional data structure; and $C_i$ represents the counter value of the majority flow in the bucket at the first location in the $i^{th}$ two-dimensional data structure.

It should be noted that, the bucket at the first location in the two-dimensional data structures may be a bucket $B(i, j)$ located in the $i^{th}$ row and the $j^{th}$ column in the two-dimensional data structures.

For example, if a K value in a bucket at another location is the same as a K value in a current bucket, an estimated value of a total size of a majority flow mapped to the bucket at the current location after the combination processing is

$$(K_{i,j}^M) = \sum_{M=1}^{q} (V_{i,j}^M + C_{i,j}^M)/2$$

and $1 \leq M \leq q$. $V_{i,j}^M$ represents a sum of volumes of all flows in a bucket $B(i, j)$ in an $M^{th}$ two-dimensional table in q two-dimensional tables. $C_{i,j}^M$ represents a counter of a majority flow in the bucket $B(i, j)$ in the $M^{th}$ two-dimensional table in the q two-dimensional tables. If the K value in the bucket at the another location is different from the K value in the current bucket, the estimated value of the size of the majority flow mapped to the bucket at the current location after the combination processing is

$$(K_{i,j}^M) = \sum_{M=1}^{q} (V_{i,j}^M - C_{i,j}^M)/2$$

, and $1 \leq M \leq q$.

Step 330: The detection apparatus detects a heavy flow based on the combined two-dimensional data structure.

The heavy flow detected by using the combined two-dimensional data structure may be a heavy flow of the network-wide level in the network. For example, a flow detected by a single data collection device may be not a heavy flow, but a flow obtained by combining flows in many data collection devices may be detected as a heavy flow. In this case, the heavy flow is a heavy flow of the network-wide level.

In a possible implementation, the two-dimensional table obtained after the combination may be queried based on a given key value of a flow, to estimate a total traffic volume or a change amount of the flow with the given key value.

In a possible implementation, flows may be sequentially polled based on a key value in each bucket in the two-dimensional table obtained after the combination, to query a total traffic volume of each flow or a change amount of each flow.

Optionally, in a possible implementation, the detection apparatus obtains the two-dimensional data structures in the plurality of data collection devices at an end moment of each time period; and that the detection apparatus detects a heavy flow based on the combined two-dimensional data structure includes:

if the detection apparatus detects, based on the combined two-dimensional data structure, that a change value of a first flow between any two time periods is greater than a first threshold, determining that the first flow is the heavy flow, that is, determining that the first flow is a heavy flow of the network-wide level in the network.

Optionally, in a possible implementation, that the detection apparatus detects a heavy flow based on the combined two-dimensional data structure includes:

if the detection apparatus detects, based on the combined two-dimensional data structure, that a total traffic volume of a first flow is greater than a second threshold, determining that the first flow is the heavy flow, that is, determining that the first flow is a heavy flow of the network-wide level in the network.

For example, the foregoing two-dimensional data structure may be an MV-Sketch, an LD-Sketch, or another data structure structure. This is not limited in this application.

According to the heavy flow detection method provided in this application, the detection apparatus obtains the two-dimensional data structures in the plurality of data collection devices, where any two-dimensional data structure may be used to store information about a flow in a network that is obtained by a corresponding data collection device; the detection apparatus may perform combination processing on the two-dimensional data structures in the plurality of data collection devices to obtain the combined two-dimensional data structure; and the detection apparatus may detect a heavy flow based on the combined two-dimensional data structure, where the heavy flow is a heavy flow of the network-wide level in the network. That is, the heavy flow detection method according to this embodiment of this application can avoid missing a heavy flow of the network-wide level in detection, and detect the heavy flow of the network-wide level, thereby increasing precision of heavy flow detection.

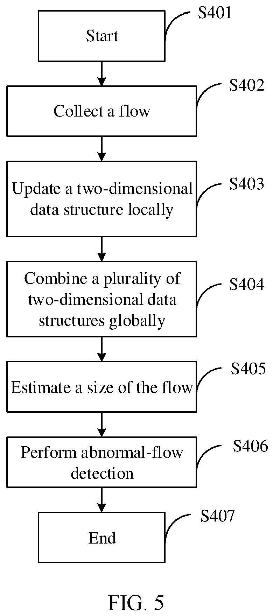

FIG. 5 is a schematic flowchart of a flow detection method according to an embodiment of this application. The detection method shown in FIG. 5 includes step 401 to step 407. The following describes step 401 to step 407 in detail.

Step 401: Start.

Step 402: A data collection device obtains a flow in a network.

It should be understood that, the network may refer to any object to be detected, and the network may be a network including one or more devices.

The data collection device may be any data collection device in the network shown in FIG. 2, and the data collection device is configured to obtain a flow in the network.

Step 403: The data collection device records information about the obtained flow into a data structure by using a local update algorithm.

For example, the foregoing data table structure may be an MV-Sketch, an LD-Sketch, or another two-dimensional data structure.

For example, the data table structure is an MV-Sketch. It is assumed that the MV-Sketch is composed of r rows, and each row includes w buckets. When obtaining flows (or data packets) in a network, the data collection device may map the flows to the 1st to the rth rows respectively by using r independent hash functions. The jth column to be mapped is determined by a hash value hi(x). A flow is mapped to one bucket in each of the two-dimensional data structures by using a hash function, and a majority flow is updated based on a majority vote algorithm.

For example, the majority flow refers to a flow whose flow size exceeds 50% of total traffic in the current bucket. It is assumed that there are three candidate flows A, B, and C, and assumed that the flows are voted in the following order: AAACCBBCCCBCC. After the third vote is recorded, flow C leads by three votes. When next three votes are processed, the three votes for flow A are offset by three other votes (CCB). Finally, after all votes are recorded, flow C becomes the majority flow.

Further, after a data collection device obtains a new flow in the network, a previous two-dimensional data structure in the data collection device needs to be updated. An update process is invoked when each flow (object X, value $V_X$) is received. The update process in the two-dimensional data structure is described by using $(X, V_X)$ as input.

For example, for each row in the two-dimensional data structure, a hash function corresponding to the row maps X to a bucket in the row. In this way, information in the bucket is updated, that is, three elements $V_{i,j}$, $K_{i,j}$, and $C_{i,j}$ in the bucket are updated, as shown in FIG. 1.

For example, the jth bucket B(i, j) in the ith row is used as an example for description. B(i, j) includes $V_{i,j}$, $K_{i,j}$ and $C_{i,j}$ before an update. $V_{i,j}$ represents total traffic of all flows in the current bucket. $K_{i,j}$ represents a key value of a majority flow in the current bucket, that is, an identifier of the majority flow. The majority flow refers to a flow whose flow size exceeds 50% of total traffic mapped to the current bucket. The counter $C_{i,j}$ represents total traffic of the majority flow in the bucket. It is assumed that three elements included in the bucket B(i, j) after the update are $V1_{i,j}$, $K1_{i,j}$, and $C1_{i,j}$. An update process using a local update algorithm is as follows:

Step 1: Total traffic of all flows in the bucket B (i, j) after the update is equal to a sum of the total traffic of all the flows in the bucket before the update and $V_X$. To be specific, $V1_{ij} = V_{i,j} + V_X$.

Step 2: If flow X is the majority flow in the bucket B(i, j) and X exists in the current bucket before the update, perform step 3; or if X is not the majority flow in the bucket B(i,j) or X previously does not exist in the current bucket, perform step 4.

Step 3: Update the total traffic ($C1_{i,j} = C_{i,j} + V_X$) of the majority flow; and return to step 2.

Step 4: Update the total traffic ($C1_{i,j} = C_{i,j} - V_X$) of the majority flow; and if $C1_{i,j}$ is less than 0 after performing step 4, perform step 5, or otherwise, return to step 2.

Step 5: Update the key value and the total traffic of the majority flow in the current bucket, where $K1_{i,j} = X$ and $C1_{i,j} = -C1_{i,j}$.

After obtaining a new flow, the data collection device updates, by using the foregoing local update algorithm, the data structure that is on the data collection device and that is used to map to-be-stored information about the flow.

In an example, the data collection device may record the information about the obtained flow by using an MV-Sketch. In this case, after obtaining a new flow, the data collection device may update the MV-Sketch on the data collection device by using the foregoing local update algorithm.

In an example, the data collection device may record the information about the obtained flow by using an LD-Sketch. In this case, after obtaining a new flow, the data collection device may update the LD-Sketch on the data collection device by using the local update algorithm.

Step 404: The detection apparatus obtains a data structure on each data collection device, and performs combination processing on the data structures to obtain a data structure obtained after the combination.

It should be understood that, the data structure on each of the foregoing data collection devices may be used to record information about a flow collected by the single-point device. However, a flow of the network-wide level, namely, a flow passing through a plurality of single-point devices, cannot be detected. In this embodiment of this application, the data structure obtained by performing combination processing on the data structures in the plurality of data collection devices may be used to detect a flow of the network-wide level, to avoid a problem of missing a heavy flow of the network-wide level in detection.

For example, the detection apparatus may periodically obtain the data structures in the data collection devices. To be specific, the data collection devices may periodically send, to the detection apparatus, the data structures used to record flow information. A value of the period may be a preset time interval.

The following describes in detail a process of performing combination processing on the data structures that are obtained by the detection apparatus from the plurality of data collection devices. In other words, the detection apparatus needs to combine the obtained data structures on all the single-point devices into a data structure used to record a flow of the network-wide level, that is, a flow passing through each single-point device.

For example, in this embodiment of this application, the detection apparatus may perform, by using a global combination algorithm, combination processing on the obtained data structures in the plurality of data collection devices. The combination processing refers to performing combination on buckets at a same location in the plurality of data structures, that is, updating flow information recorded in the buckets at the same location. For example, for an MV-Sketch, $V_{i,j}$, $K_{i,j}$, and $C_{i,j}$ that are included in each bucket obtained after the combination need to be updated.

An example in which the detection apparatus obtains q data structures is used for description. The detection apparatus may perform combination processing on the buckets at a same location in the q data structures, to update information in the data structures to obtain a data structure obtained after the combination processing. For example, a process of performing combination processing on the q MV-Sketch two-dimensional tables by using the global combination algorithm is as follows:

Step 1: Update a sum of sizes of flows in a bucket, that is, sum up all data traffic in the q two-dimensional tables that is mapped to the current bucket.

For example, values of V in buckets B(i, j) at a same location in all the q two-dimensional tables are added up to obtain a V value in a bucket B(i, j) in a two-dimensional table obtained after combination processing. That is, $$V_{i,j} = \sum_{M=1}^{q} V_{i,j}^{M}$$ , , and $1 \le M \le q$ . $V_{i,j}^{M}$ represents a sum of sizes of all flows in the bucket B(i, j) in an $M^{th}$ two-dimensional table in the q two-dimensional tables, where M is an integer.

Step 2: Update a key value of a majority flow in the bucket by comparing the key value in the current bucket with a key value in a bucket at a same location in another two-dimensional table

For example, if a K value in a bucket at another location is the same as the K value in the current bucket, an estimated value of a size of the majority flow mapped to the bucket at the current location after the combination

processing is $$(K_{i,j}^{M}) = \sum_{M=1}^{q} (V_{i,j}^{M} + C_{i,j}^{M})/2$$ , and $1 \le M \le q$ . $V_{i,j}^{M}$ represents the sum of the sizes of all the flows in the bucket B(i,j) in the $M^{th}$ two-dimensional table in the q two-dimensional tables. $C_{i,j}^{M}$ represents a counter of a majority flow in the bucket B(i, j) in the $M^{th}$ two-dimensional table in the q two-dimensional tables. If the K value in the bucket at the another location is different from the K value in the current bucket, the estimated value of the size of the majority flow mapped to the bucket at the current location after the combination processing is

$$(K_{i,j}^M) = \sum_{M=1}^{q} (V_{i,j}^M - C_{i,j}^M)/2$$

, and $1 \le M \le q$.

Step 3: Compare estimated values of sizes of possible majority flows in the buckets B(i, j) in the q two-dimensional tables, and select a key value of a flow corresponding to a maximum estimated value thereof as $K_{i,j}$ in the current bucket B(i, j).

Step 4: Update a K value in the bucket B(i, j) in the two-dimensional table obtained after the combination processing.

Step 5: Update $C_{i,j}$ in the bucket B(i, j) in the two-dimensional table obtained after the combination processing, that is, a counter value of the majority flow in the bucket B(i, j), where $C_{i,j} = Max\{2est(K_{i,j})-V_{i,j},0\}$.

By using the foregoing global combination algorithm, the detection apparatus may combine the obtained q two-dimensional tables in the plurality of data collection devices, to obtain the two-dimensional table used to record a flow of the network-wide level, that is, a flow passing through each single-point device.

The following provides an example description by using a process in which a two-dimensional table obtained after combination processing is obtained from q two-dimensional tables by using the foregoing global combination algorithm. It is assumed that buckets (1, 1) in three two-dimensional tables are combined by using the foregoing global combination algorithm. No more than three possible key values X, Y, and Z exist for key values in the buckets (1, 1) in the three two-dimensional tables, that is, the key values in the buckets (1, 1) in the three two-dimensional tables are all different, or the key values in the buckets (1, 1) in the three two-dimensional tables may be partially or totally the same. For example, if a key value in the bucket (1, 1) in a first two-dimensional table is X, an estimated value of a size of a flow corresponding to the key value X in the first two-dimensional table is

$$e1(X) \sim (V_{1,1}^1 + C_{1,1}^1)/2$$

; or if a key value in the bucket (1, 1) in a first two-dimensional table is not X, an estimated value of a size of a flow corresponding to the key value X in the first two-dimensional table is

$$e1(X) \sim (V_{1,1}^1 - C_{1,1}^1)/2$$

. Further, it is determined whether a key value in the bucket (1, 1) in a second two-dimensional table is X. If the key value in the bucket (1, 1) in the second two-dimensional table is X, a combination operation is performed on locations of the buckets (1, 1) in the first two-dimensional table and the second two-dimensional table to obtain an estimated value of a size of a flow corresponding to the key value X, and the

$$e2(X) \sim e1(X) + (V_{1,1}^2 + C_{1,1}^2)/2$$

estimated value is ; or if the key value in the bucket (1, 1) in the second two-dimensional table is not X, a combination operation is performed on locations of the buckets (1, 1) in the first two-dimensional table and the second two-dimensional table to obtain an estimated value of a sum of sizes of flows corresponding to the key value X, and the estimated

$$e2(X) \sim e1(X) + (V_{1,1}^2 - C_{1,1}^2)/2$$

value is . Further, it is determined whether a key value in the bucket (1, 1) in a third two-dimensional table is X. If the key value in the bucket (1, 1) in the third two-dimensional table is X, a combination operation is performed on locations of the buckets (1, 1) in the first two-dimensional table, the second two-dimensional table, and the third two-dimensional table to obtain an estimated value of a sum of sizes of flows corresponding to the key value X, and the esti-

$$e3(X) \sim e2(X) + (V_{1,1}^3 + C_{1,1}^3)/2$$

mated value is ; or if the key value in the bucket (1, 1) in the third two-dimensional table is not X, a combination operation is performed on locations of the buckets (1, 1) in the first two-dimensional table, the second two-dimensional table, and the third two-dimensional table to obtain an estimated value of a size of a flow corresponding to the key value X, and the estimated value is

$$e3(X) \sim e2(X) + (V_{1,1}^3 - C_{1,1}^3)/2$$

. Similarly, an estimated value of a sum of sizes of flows corresponding to the key value Y or Z in the bucket (1, 1) in the first two-dimensional table is separately calculated. Finally, a key value in the bucket (1, 1) in a two-dimensional table obtained after the combination is a key value of a flow corresponding to a maximum estimated value in the estimated values of the sum of the sizes of the flows. $Max\{2*e3(K)-V_{i,j},0\}$ is selected as $C_{1,1}$ in the bucket (1,1) obtained after the combination. e3(K) represents a maximum value among *e3(X), e3(Y), and e3(Z). $V_{i,j}$* represents a sum of sizes of all flows in the buckets (1, 1) in the three two-dimensional tables. In the bucket (1,1) in the two-dimensional table obtained after the combination,

$$V_{1,1} = \sum_{M=1}^{3} V_{1,1}^M$$

, which is the sum of the sizes of all the flows in the buckets (1,1) in the three two-dimensional tables.

In a possible implementation, one two-dimensional table may be deployed on one data collection device, and the data collection device can record flow information in the two-dimensional table by using the local update algorithm in step 403.

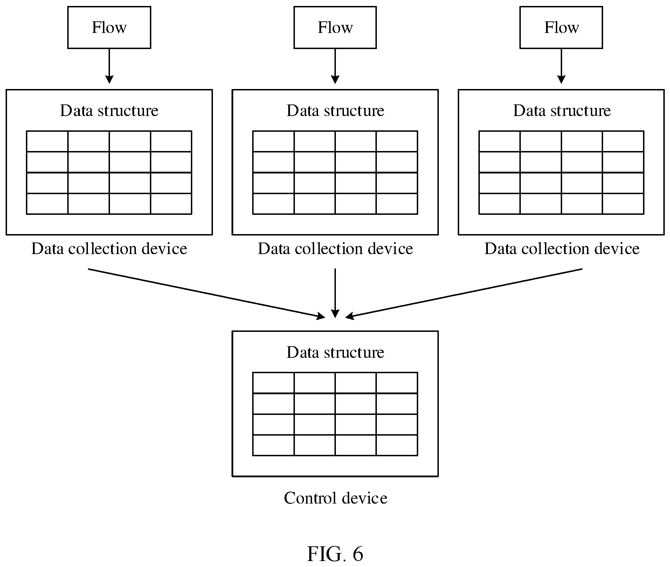

For example, as shown in FIG. 6, after obtaining a flow, each data collection device may record information about the flow in a two-dimensional data structure. The detection apparatus may obtain two-dimensional data structures in a plurality of data collection devices, and perform combination processing on the plurality of two-dimensional data structures by using the foregoing global combination algorithm, to obtain a two-dimensional data structure that is obtained after the combination and that is used to record a flow of the network-wide level. The foregoing data collection devices may be a plurality of data collection devices in a same network, or may be a plurality of data collection devices in different networks.

In a possible implementation, a plurality of two-dimensional tables may alternatively be deployed on one data collection device, and the data collection device evenly records information about an obtained flow in the plurality of two-dimensional tables. Further, the plurality of two-dimensional tables deployed on the data collection device may be combined into one two-dimensional table by using the foregoing global combination algorithm. The detection apparatus obtains the two-dimensional table obtained after the combination in each data collection device, and then performs combination processing to finally obtain a two-dimensional table used to record a flow of the network-wide level, that is, a flow passing through each single-point device.

For example, the foregoing two-dimensional table may be an MV-Sketch, an LD-Sketch, or another data structure structure. This is not limited in this application.

Step 405: Estimate a size of the flow.

For example, a size of a flow may be estimated based on the two-dimensional table obtained after the combination processing in step 404.

In a possible implementation, the two-dimensional table obtained after the combination may be queried based on a given key value of a flow, to estimate a total traffic volume or a change amount of the flow with the given key value.

In a possible implementation, flows may be sequentially polled based on a key value in each bucket in the two-dimensional table obtained after the combination, to query a total traffic volume of each flow or a change amount of each flow.

For example, the two-dimensional data structure obtained after the combination may be used to estimate total traffic of a flow. Flow X is mapped to a bucket in each of the 1st to dth rows in the two-dimensional data structure obtained after the combination. A flow size may be estimated by using the following estimation algorithm:

Step 1: Assuming that a traffic volume of flow X is to be queried, if a key value in a current bucket in the two-dimensional table obtained after the combination is the same as a key value of flow X, an estimated value of a total traffic volume of flow X in the current bucket B(i, j) is $S_i(x)=(V_i-C_i)/2$; where $Y_{i,j}$ represents a total traffic volume of all flows in the current bucket B(i, j) in the two-dimensional table obtained after the combination, and $C_{i,j}$ represents a counter value of a majority flow in the current bucket B(i, j) in the two-dimensional table obtained after the combination; or if a key value in a current bucket in the two-dimensional table obtained after the combination is different from a key value of flow X, an estimated value of a total traffic volume of flow X in the current bucket B(i, j) is $S_i(x)=(V_i-C_i)/2$;

Step 2: An estimated value of a total traffic volume of flow X is $S(x)=\min\{S_i(x), 1\leq i\leq d\}$.

Step 406: Perform abnormal-flow detection.

The abnormal-flow detection may be determining whether flow X in step 405 is a heavy hitter or a heavy changer, that is, determining whether flow X is a heavy flow.

Schematically, a threshold φ (0 < φ < 1) is given; S may represent a traffic flow sum of all flows in one period; and D may represent a difference between traffic flow sums of all flows in two time periods, namely, a change value. Whether flow X is a heavy hitter or a heavy changer may be determined based on the following procedure:

1. If $S(x)\geq\varphi S$, it indicates that flow X is a heavy hitter.
2. If $D(x)\geq\varphi D$, it indicates that flow X is a heavy changer, where $D(x)$ represents a difference of $S(x)$ of flow X between the two time periods, namely, a change amount of flow X between the two time periods.

When flow X meets 1 or 2 above, it can be determined that flow X is a heavy flow of the network-wide level, and subsequent monitoring may be performed on flow X.

Step 407: End.

It should be understood that, the foregoing example description is intended to help a person skilled in the art understand the embodiments of this application, but is not intended to limit the embodiments of this application to specific values or specific scenarios illustrated. A person skilled in the art clearly can make various equivalent modifications or changes according to the examples described above, and such modifications or changes also fall within the scope of the embodiments of this application.

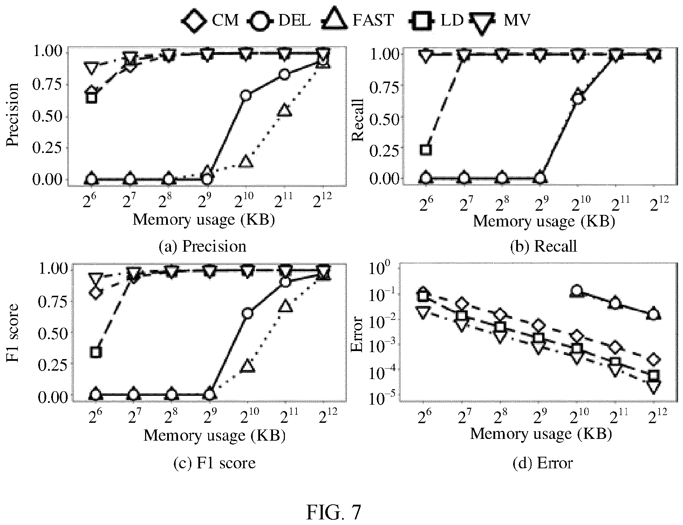

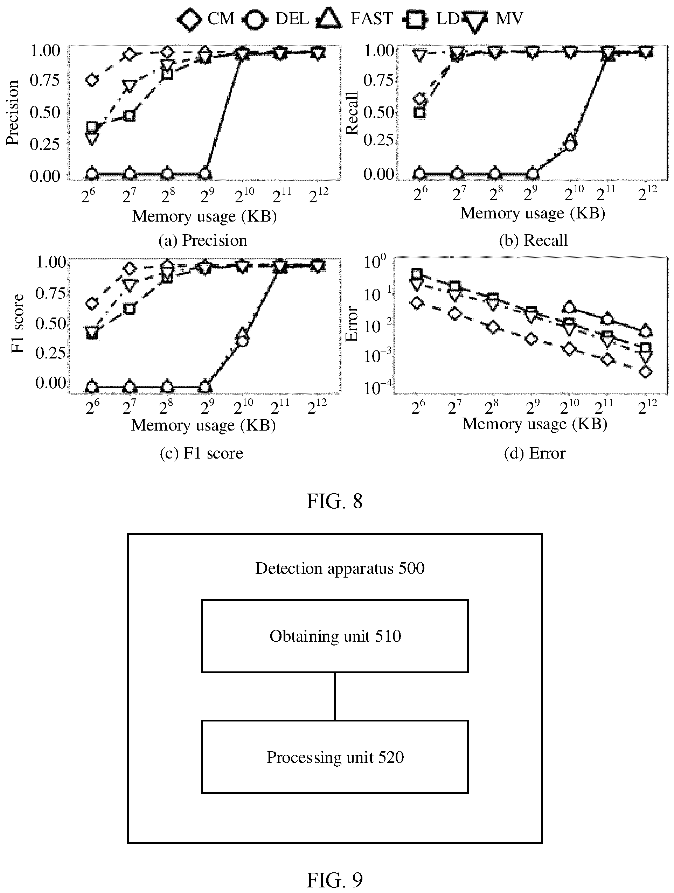

FIG. 7 is a schematic diagram of a heavy hitter detection result on an open network traffic data set according to an embodiment of this application. FIG. 8 is a schematic diagram of a heavy changer detection result on an open data traffic data set according to an embodiment of this application.

In the schematic diagrams of the detection results shown in FIG. 7 and FIG. 8, data set collection duration is 5 minutes, and every 1 minute is a time period. Each period includes about 29 MB data packets and 1 million flows, and a memory size ranges from 64 KB to 4 MB. Test indicators include: precision (precision), which is used to estimate a proportion of a heavy flow in a detection result to all flows; recall (recall), which is used to estimate a ratio of a heavy flow in a detection result to all heavy flows; F1 score (F1 Score), which is used to provide an overall evaluation on the precision and the recall; and relative error, which is an error ratio of flow estimation in a test period. Data structures in the detection result include a Count-min (Count-min, CM) data structure, a Majority vote (Majority vote, MV) data structure, a Local-distributed (LD) data structure, a Deltoid (Del) data structure, and a FAST (FAST) data structure.

It can be learned from the detection results shown in FIG. 7 and FIG. 8 that the detection method according to the embodiments of this application achieves a better effect than the other methods: the recall is always 1, and when the memory exceeds 128 KB, the precision is above 95% and the relative error is below 0.01.

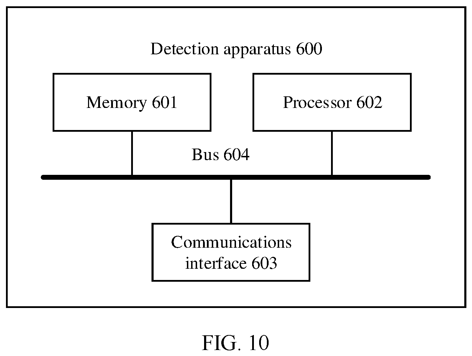

The foregoing describes in detail the heavy flow detection method according to the embodiments of this application with reference to FIG. 1 to FIG. 8. The following describes in detail apparatus embodiments of this application with reference to FIG. 9 and FIG. 10. It should be understood that, a detection apparatus in the embodiments of this application may perform various heavy flow detection methods in the foregoing embodiments of this application. In other words, for specific working processes of the following products, refer to corresponding processes in the foregoing method embodiments.

FIG. 9 is a schematic block diagram of a heavy flow detection apparatus 500 according to an embodiment of this application. It should be understood that, the detection apparatus 500 can perform steps in the detection method in FIG. 4 or FIG. 5. To avoid repetition, details are not described herein again. The detection apparatus 500 includes an obtaining unit 510 and a processing unit 520.

The obtaining unit 510 is configured to obtain two-dimensional data structures in a plurality of data collection devices, where each of the two-dimensional data structures is used to store information about a flow in a network that is obtained by a corresponding data collection device. The processing unit 520 is configured to perform combination processing on the two-dimensional data structures in the plurality of data collection devices to obtain a combined two-dimensional data structure; and detect a heavy flow based on the combined two-dimensional data structure, where the heavy flow is a heavy flow of a network-wide level in the network.

Optionally, in an embodiment, the two-dimensional data structure is a data structure formed by a plurality of buckets, and the processing unit 520 is specifically configured to:
perform combination processing on buckets at a same location in the two-dimensional data structures in the plurality of data collection devices to obtain the combined two-dimensional data structure.

Optionally, in an embodiment, any bucket in the two-dimensional data structures in the plurality of data collection devices includes a data traffic flow sum in the current bucket, a key value of a majority flow in the current bucket, and a counter value of the majority flow; and any bucket in the combined two-dimensional data structure includes an updated data traffic flow sum, a key value of an updated majority flow, and a counter value of the updated majority flow, where the any bucket includes a bucket at a first location; and the processing unit 520 is specifically configured to:

add up the data traffic flow sums in the buckets at the first location in the two-dimensional data structures in the plurality of data collection devices to obtain the updated data traffic flow sum in the bucket at the first location;
compare traffic volumes of the majority flows in the buckets at the first location in the two-dimensional data structures in the plurality of data collection devices to obtain the key value of the updated majority flow in the bucket at the first location; and
obtain the counter value of the updated majority flow in the bucket at the first location by using the key value of the updated majority flow and a traffic volume of the majority flow.

Optionally, in an embodiment, the two-dimensional data structures in the plurality of data collection devices are N two-dimensional data structures, and the key values of the majority flows corresponding to the buckets at the first location in the N two-dimensional data structures are X key values, where X is a positive integer less than or equal to N; and the processing unit 520 is specifically configured to:

determine that the traffic volumes of the majority flows in the buckets at the first location in the N two-dimensional data structures are estimated values of traffic volumes of flows corresponding to any one of the X key values; and
determine that a flow having a maximum traffic volume in the flows corresponding to the any one of the X key values is the updated majority flow.

Optionally, in an embodiment:
an estimated value of the traffic volume of the majority flow in the bucket at the first location in an $i^{th}$ two-dimensional data structure in the N two-dimensional data structures is obtained based on the following formula:

if the key value of the majority flow in the bucket at the first location in the $i^{th}$ two-dimensional data structure is a first key value, an estimated value of a traffic volume of a flow corresponding to the first key value is $S_i(x) = (V_i + C_i)/2$; or
if the key value of the majority flow in the bucket at the first location in the $i^{th}$ two-dimensional data structure is not a first key value, an estimated value of a traffic volume of a flow corresponding to the first key value is $S_i(x) = (V_i - C_i)/2$; where
$S_i(x)$ represents the estimated value of the traffic volume of the flow corresponding to the first key value; X represents the first key value, and $V_i$ represents a traffic flow sum of all flows in the bucket at the first location in the $i^{th}$ two-dimensional data structure; and $C_i$ represents the counter value of the majority flow in the bucket at the first location in the $i^{th}$ two-dimensional data structure.

Optionally, in an embodiment, the obtaining unit 510 is specifically configured to obtain the two-dimensional data structures in the plurality of data collection devices at an end moment of each time period; and the processing unit 520 is specifically configured to:
if it is detected, based on the combined two-dimensional data structure, that a change value of a first flow between any two time periods is greater than a first threshold, determine that the first flow is the heavy flow.

Optionally, in an embodiment, the processing unit 520 is specifically configured to:
if it is detected, based on the combined two-dimensional data structure, that a total traffic volume of a first flow is greater than a second threshold, determine that the first flow is the heavy flow.

Optionally, in an embodiment, the two-dimensional data structure includes a majority vote data structure MV-Sketch.

It should be understood that, the detection apparatus 500 herein is presented in a form of a functional unit. The term "unit" herein may be implemented in a form of software and/or hardware, which is not specifically limited.

For example, "unit" may be a software program, a hardware circuit, or a combination thereof that implements the foregoing functions. The hardware circuit may include an application-specific integrated circuit (application specific integrated circuit, ASIC), an electronic circuit, a processor (for example, a shared processor, a dedicated processor, or a group processor) for executing one or more software or firmware programs and a memory, a merging logic circuit, and/or another suitable component supporting the described functions.

Therefore, units in the examples described in the embodiments of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 10 is a schematic structural diagram of hardware of a heavy flow detection apparatus according to an embodiment of this application.

A detection apparatus 600 shown in FIG. 10 includes a memory 601, a processor 602, a communications interface 603, and a bus 604. The memory 601, the processor 602, and the communications interface 603 implement communication and connection with each other by using the bus 604.

The memory 601 may be a read-only memory (read-only memory, ROM), a static storage device, and a random access memory (random access memory, RAM). The memory 601 may store a program. When the program stored in the memory 601 is executed by the processor 602, the processor 602 and the communications interface 603 are configured to perform steps of the heavy flow detection method in the embodiments of this application, for example, steps of the heavy flow detection method shown in FIG. 4 or FIG. 5.

The processor 602 may use a general-purpose CPU, a microprocessor, an ASIC, a GPU, or one or more integrated circuits, and is configured to execute a related program to implement functions that need to be executed by the units in the detection apparatus shown in FIG. 9 in the embodiments of this application, or execute the heavy flow detection method in the method embodiments of this application.

The processor 602 may be an integrated circuit chip and has a signal processing capability. In an implementation process, steps of the heavy flow detection method in the embodiments of this application may be completed by using an integrated logic circuit of hardware in the processor 602 or an instruction in a form of software.

The foregoing processor 602 may further be a general purpose processor, a DSP, an ASIC, an FPGA or another programmable logic device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 601, and the processor 602 reads information in the memory 601 to complete, in combination with hardware of the processor 602, the functions that need to be executed by the units included in the detection apparatus in the embodiments of this application, or perform the heavy flow detection method in the method embodiments of this application.

For example, the processor 602 may correspond to the processing unit 520 in the detection apparatus shown in FIG. 9.

The communications interface 603 uses a transceiver apparatus, for example but not limited to, a transceiver to implement communication between the detection apparatus 600 and another device or a communications network.

For example, the communications interface 603 may correspond to the obtaining unit 510 in the detection apparatus shown in FIG. 9, and the communications interface 603 may be used to obtain two-dimensional data structures in a plurality of data collection devices.

The bus 604 may include a path for transmitting information between various components of the detection apparatus 600 (for example, the memory 601, the processor 602, and the communications interface 603).

It should be noted that, although only the memory, the processor, and the communications interface of the detection apparatus 600 are shown, in a specific implementation process, a person skilled in the art should understand that the detection apparatus 600 may further include another component necessary for normal operation. In addition, according to a specific requirement, a person skilled in the art should understand that the described detection apparatus 600 may further include hardware components for implementing other additional functions. Moreover, a person skilled in the art should understand that, the detection apparatus 600 may alternatively include only components necessary for implementing the embodiments of this application, but does not need to include all components shown in FIG. 10.

An embodiment of this application further provides a system. The system includes the foregoing detection apparatus and a plurality of data collection devices. The detection apparatus may perform the heavy flow detection method in the foregoing method embodiments.

An embodiment of this application further provides a chip. The chip includes a transceiver unit and a processing unit. The transceiver unit may be an input/output circuit or a communications interface. The processing unit is a processor, a microprocessor, or an integrated circuit that is integrated on the chip. The chip may perform the heavy flow detection method in the foregoing method embodiments.

An embodiment of this application further provides a computer readable storage medium, which stores an instruction. When the instruction is executed, the heavy flow detection method in the foregoing method embodiments is performed.

An embodiment of this application further provides a computer program product including an instruction. When the instruction is executed, the heavy flow detection method in the foregoing method embodiments is performed.

It should be understood that, the processor in the embodiments of this application may be a central processing unit (central processing unit, CPU), or may further be another general purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It should also be understood that in the embodiments of this application, the memory may include a read-only memory and a random access memory, and provide an instruction and data to the processor. A part of the processor may further include a non-volatile random access memory. For example, the processor may further store information of a device type.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing module, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A heavy flow detection method, comprising:

    obtaining (310), by a detection apparatus, two-dimensional data structures from a plurality of data collection devices, wherein each of the two-dimensional data structures is used to store information about a flow in a network that is obtained by a corresponding data collection device;
    performing (320), by the detection apparatus, combination processing on the two-dimensional data structures from the plurality of data collection devices to obtain a combined two-dimensional data structure; and
detecting (330), by the detection apparatus, a heavy flow based on the combined two-dimensional data structure, wherein the heavy flow is a heavy flow of a network-wide level in the network;
wherein the two-dimensional data structure is a data structure formed by a plurality of buckets, and the performing, by the detection apparatus, combination processing on the two-dimensional data structures in the plurality of data collection devices to obtain a combined two-dimensional data structure comprises:

    performing, by the detection apparatus, combination processing on buckets at a same location in the two-dimensional data structures in the plurality of data collection devices to obtain the combined two-dimensional data structure;
    wherein any bucket in the two-dimensional data structures in the plurality of data collection devices comprises a data traffic flow sum in the current bucket, a key value of a majority flow in the current bucket, and a counter value of the majority flow; and any bucket in the combined two-dimensional data structure comprises an updated data traffic flow sum, a key value of an updated majority flow, and a counter value of the updated majority flow, wherein the any bucket comprises a bucket at a first location; and
the performing, by the detection apparatus, combination processing on buckets at a same location in the two-dimensional data structures in the plurality of data collection devices to obtain the combined two-dimensional data structure comprises:

    adding up the data traffic flow sums in the buckets at the first location in the two-dimensional data structures in the plurality of data collection devices to obtain the updated data traffic flow sum in the bucket at the first location;
    comparing traffic volumes of the majority flows in the buckets at the first location in the two-dimensional data structures in the plurality of data collection devices to obtain the key value of the updated majority flow in the bucket at the first location; and
    obtaining the counter value of the updated majority flow in the bucket at the first location by using the key value of the updated majority flow and a traffic volume of the majority flow.

2. The detection method according to claim 1, wherein the two-dimensional data structures in the plurality of data collection devices are N two-dimensional data structures, and the key values of the majority flows corresponding to the buckets at the first location in the N two-dimensional data structures are X key values, wherein X is a positive integer less than or equal to N; and
the comparing traffic volumes of the majority flows in the buckets at the first location in the two-dimensional data structures in the plurality of data collection devices to obtain the key value of the updated majority flow in the bucket at the first location comprises:

determining that the traffic volumes of the majority flows in the buckets at the first location in the N two-dimensional data structures are estimated values of traffic volumes of flows corresponding to any one of the X key values; and determining that a flow having a maximum traffic volume in the flows corresponding to the any one of the X key values is the updated majority flow.

3. The detection method according to claim 2, wherein a first key value is any one of the X key values; and an estimated value of the traffic volume of the majority flow in the bucket at the first location in an $i^{th}$ two-dimensional data structure in the N two-dimensional data structures is obtained based on the following formula:

if the key value of the majority flow in the bucket at the first location in the $i^{th}$ two-dimensional data structure is the first key value, an estimated value of a traffic volume of a flow corresponding to the first key value is $S_i(x)$ or
if the key value of the majority flow in the bucket at the first location in the $i^{th}$ two-dimensional data structure is not the first key value, an estimated value of a traffic volume of a flow corresponding to the first key value is $S_i(x)=(V_i-C_i)/2$; wherein $X$ represents the first key value, and $V_i$ represents a traffic flow sum of all flows in the bucket at the first location in the $i^{th}$ two-dimensional data structure; and $C_i$ represents the counter value of the majority flow in the bucket at the first location in the $i^{th}$ two-dimensional data structure.

4. The detection method according to any one of claims 1 to 3, wherein the obtaining, by a detection apparatus, two-dimensional data structures in a plurality of data collection devices comprises:

obtaining, by the detection apparatus, the two-dimensional data structures in the plurality of data collection devices at an end moment of each time period; and
the detecting, by the detection apparatus, a heavy flow based on the combined two-dimensional data structure comprises:
if the detection apparatus detects, based on the combined two-dimensional data structure, that a change value of a first flow between any two time periods is greater than a first threshold, determining that the first flow is a heavy flow.

5. The detection method according to any one of claims 1 to 3, wherein the detecting, by the detection apparatus, a heavy flow based on the combined two-dimensional data structure comprises:
if the detection apparatus detects, based on the combined two-dimensional data structure, that a total traffic volume of a first flow is greater than a second threshold, determining that the first flow is the heavy flow.

6. The detection method according to any one of claims 1 to 5, wherein the two-dimensional data structure comprises a majority vote data structure, MV-Sketch.

7. A heavy flow detection apparatus, comprising:

an obtaining unit, configured to obtain two-dimensional data structures from a plurality of data collection devices, wherein each of the two-dimensional data structures is used to store information about a flow in a network that is obtained by a corresponding data collection device; and
a processing unit, configured to perform combination processing on the two-dimensional data structures from the plurality of data collection devices to obtain a combined two-dimensional data structure; and detect a heavy flow based on the combined two-dimensional data structure, wherein the heavy flow is a heavy flow of a network-wide level in the network;
wherein the two-dimensional data structure is a data structure formed by a plurality of buckets, and the processing unit is specifically configured to:

perform combination processing on buckets at a same location in the two-dimensional data structures in the plurality of data collection devices to obtain the combined two-dimensional data structure,
wherein any bucket in the two-dimensional data structures in the plurality of data collection devices comprises a data traffic flow sum in the current bucket, a key value of a majority flow in the current bucket, and a counter value of the majority flow; and any bucket in the combined two-dimensional data structure comprises an updated data traffic flow sum, a key value of an updated majority flow, and a counter value of the updated majority flow, wherein the any bucket comprises a bucket at a first location; and

the processing unit is specifically configured to:

add up the data traffic flow sums in the buckets at the first location in the two-dimensional data structures in the plurality of data collection devices to obtain the updated data traffic flow sum in the bucket at the first location;

compare traffic volumes of the majority flows in the buckets at the first location in the two-dimensional data structures in the plurality of data collection devices to obtain the key value of the updated majority flow in the bucket at the first location; and

obtain the counter value of the updated majority flow in the bucket at the first location by using the key value of the updated majority flow and a traffic volume of the majority flow.

8. The detection apparatus according to claim 7, wherein the obtaining unit is specifically configured to:

obtain the two-dimensional data structures in the plurality of data collection devices at an end moment of each time period; and

the processing unit is specifically configured to: if it is detected, based on the combined two-dimensional data structure, that a change value of a first flow between any two time periods is greater than a first threshold, determine that the first flow is the heavy flow.

9. The detection apparatus according to claim 7, wherein the processing unit is specifically configured to:

if it is detected, based on the combined two-dimensional data structure, that a total traffic volume of a first flow is greater than a second threshold, determine that the first flow is the heavy flow.

10. A heavy flow detection apparatus, comprising:

a memory, configured to store a program; and

a processor, configured to execute the program stored in the memory, wherein when the program stored in the memory is executed, the processor is configured to perform the detection method according to any one of claims 1 to 6.

11. A computer storage medium, wherein the computer storage medium stores program code, and the program code comprises an instruction used to perform a step in the detection method according to any one of claims 1 to 6.

**Patentansprüche**

1. Schwerflussdetektionsverfahren, umfassend:

Erlangen (310), durch eine Detektionsvorrichtung, von zweidimensionalen Datenstrukturen von einer Vielzahl von Datenerfassungseinrichtungen, wobei jede der zweidimensionalen Datenstrukturen verwendet wird, um Informationen über einen Fluss in einem Netzwerk zu speichern, der durch eine entsprechende Datenerfassungseinrichtung erlangt wird;

Durchführen (320), durch die Detektionsvorrichtung, einer Kombinationsverarbeitung an den zweidimensionalen Datenstrukturen von der Vielzahl von Datenerfassungseinrichtungen, um eine kombinierte zweidimensionale Datenstruktur zu erlangen; und

Detektieren, (330), durch die Detektionsvorrichtung, eines Schwerflusses basierend auf der kombinierten zweidimensionalen Datenstruktur, wobei der Schwerfluss ein Schwerfluss einer netzwerkweiten Ebene in dem Netzwerk ist; wobei die zweidimensionale Datenstruktur eine Datenstruktur ist, die durch eine Vielzahl von Buckets gebildet ist, und das Durchführen, durch die Detektionsvorrichtung, einer Kombinationsverarbeitung an den zweidimensionalen Datenstrukturen in der Vielzahl von Datenerfassungseinrichtungen, um eine kombinierte zweidimensionale Datenstruktur zu erlangen, Folgendes umfasst:

Durchführen, durch die Detektionsvorrichtung, einer Kombinationsverarbeitung an Buckets an einer gleichen Stelle in den zweidimensionalen Datenstrukturen in der Vielzahl von Datenerfassungseinrichtungen, um die kombinierte zweidimensionale Datenstruktur zu erlangen;

wobei jeder Bucket in den zweidimensionalen Datenstrukturen in der Vielzahl von Datenerfassungseinrichtungen eine Datenverkehrsflusssumme in dem aktuellen Bucket, einen Schlüsselwert eines Mehrheitsflusses in dem aktuellen Bucket und einen Zählerwert des Mehrheitsflusses umfasst;

und jeder Bucket in der kombinierten zweidimensionalen Datenstruktur eine aktualisierte Datenverkehrsflusssumme, einen Schlüsselwert eines aktualisierten Mehrheitsflusses und einen Zählerwert des aktualisierten Mehrheitsflusses umfasst, wobei jeder Bucket einen Bucket an einer ersten Stelle umfasst; und

das Durchführen, durch die Detektionsvorrichtung, einer Kombinationsverarbeitung an Buckets an einer gleichen Stelle in den zweidimensionalen Datenstrukturen in der Vielzahl von Datenerfassungseinrichtungen, um die kombinierte zweidimensionale Datenstruktur zu erlangen, Folgendes umfasst:

Addieren der Datenverkehrsflusssummen in den Buckets an der ersten Stelle in den zweidimensionalen Datenstrukturen in der Vielzahl von Datenerfassungseinrichtungen, um die aktualisierte Datenverkehrsflusssumme in dem Bucket an der ersten Stelle zu erlangen;
Vergleichen von Verkehrsmengen der Mehrheitsflüsse in den Buckets an der ersten Stelle in den zweidimensionalen Datenstrukturen in der Vielzahl von Datenerfassungseinrichtungen, um den Schlüsselwert des aktualisierten Mehrheitsflusses in dem Bucket an der ersten Stelle zu erlangen; und
Erlangen des Zählerwerts des aktualisierten Mehrheitsflusses in dem Bucket an der ersten Stelle durch Verwendung des Schlüsselwerts des aktualisierten Mehrheitsflusses und einer Verkehrsmenge des Mehrheitsflusses.

2. Detektionsverfahren nach Anspruch 1, wobei die zweidimensionalen Datenstrukturen in der Vielzahl von Datenerfassungseinrichtungen N zweidimensionale Datenstrukturen sind und die Schlüsselwerte der Mehrheitsflüsse, die den Buckets an der ersten Stelle in den N zweidimensionalen Datenstrukturen entsprechen, X Schlüsselwerte sind, wobei X eine positive Ganzzahl kleiner oder gleich N ist; und das Vergleichen von Verkehrsmengen der Mehrheitsflüsse in den Buckets an der ersten Stelle in den zweidimensionalen Datenstrukturen in der Vielzahl von Datenerfassungseinrichtungen, um den Schlüsselwert des aktualisierten Mehrheitsflusses in dem Bucket an der ersten Stelle zu erlangen, Folgendes umfasst:

Bestimmen, dass die Verkehrsmengen der Mehrheitsflüsse in den Buckets an der ersten Stelle in den N zweidimensionalen Datenstrukturen geschätzte Werte von Verkehrsmengen von Flüssen sind, die einem der X Schlüsselwerte entsprechen; und
Bestimmen, dass ein Fluss, der eine maximale Verkehrsmenge in den Flüssen aufweist, die einem der X Schlüsselwerte entsprechen, der aktualisierte Mehrheitsfluss ist.

3. Detektionsverfahren nach Anspruch 2, wobei ein erster Schlüsselwert einer der X Schlüsselwerte ist; und ein geschätzter Wert der Verkehrsmenge des Mehrheitsflusses in dem Bucket an der ersten Stelle in einer i-ten zweidimensionalen Datenstruktur in den N zweidimensionalen Datenstrukturen basierend auf der folgenden Formel erlangt wird:

wenn der Schlüsselwert des Mehrheitsflusses in dem Bucket an der ersten Stelle in der i-ten zweidimensionalen Datenstruktur der erste Schlüsselwert ist, ist ein geschätzter Wert einer Verkehrsmenge eines Flusses, der dem ersten Schlüsselwert entspricht, $S_i(x)=(V_i+C_i)/2$; oder wenn der Schlüsselwert des Mehrheitsflusses in dem Bucket an der ersten Stelle in der i-ten zweidimensionalen Datenstruktur nicht der erste Schlüsselwert ist, ist ein geschätzter Wert einer Verkehrsmenge eines Flusses, der dem ersten Schlüsselwert entspricht, $S_i(x)=(V_i-C_i)/2$; wobei
X den ersten Schlüsselwert darstellt und $V_i$ eine Verkehrsflusssumme aller Flüsse in dem Bucket an der ersten Stelle in der i-ten zweidimensionalen Datenstruktur darstellt; und $C_i$ den Zählerwert des Mehrheitsflusses in dem Bucket an der ersten Stelle in der i-ten zweidimensionalen Datenstruktur darstellt.

4. Detektionsverfahren nach einem der Ansprüche 1 bis 3, wobei das Erlangen, durch eine Detektionsvorrichtung, von zweidimensionalen Datenstrukturen in einer Vielzahl von Datenerfassungseinrichtungen Folgendes umfasst:

Erlangen, durch die Detektionsvorrichtung, der zweidimensionalen Datenstrukturen in der Vielzahl von Datenerfassungseinrichtungen zu einem Endzeitpunkt jedes Zeitraums; und
das Detektieren, durch die Detektionsvorrichtung, eines Schwerflusses basierend auf der kombinierten zweidimensionalen Datenstruktur Folgendes umfasst:
wenn die Detektionsvorrichtung basierend auf der kombinierten zweidimensionalen Datenstruktur detektiert, dass ein Änderungswert eines ersten Flusses zwischen zwei beliebigen Zeiträumen größer als ein erster Schwellenwert ist, Bestimmen, dass der erste Fluss ein Schwerfluss ist.

**5.** Detektionsverfahren nach einem der Ansprüche 1 bis 3, wobei das Detektieren, durch die Detektionsvorrichtung, eines Schwerflusses basierend auf der kombinierten zweidimensionalen Datenstruktur Folgendes umfasst:
wenn die Detektionsvorrichtung basierend auf der kombinierten zweidimensionalen Datenstruktur detektiert, dass eine Gesamtverkehrsmenge eines ersten Flusses größer als ein zweiter Schwellenwert ist, Bestimmen, dass der erste Fluss der Schwerfluss ist.

**6.** Detektionsverfahren nach einem der Ansprüche 1 bis 5, wobei die zweidimensionale Datenstruktur eine Mehrheitswahl-Datenstruktur, MV-Sketch, umfasst.

**7.** Schwerflussdetektionsvorrichtung, umfassend:

eine Erlangungseinheit, die dazu konfiguriert ist, zweidimensionale Datenstrukturen von einer Vielzahl von Datenerfassungseinrichtungen zu erlangen, wobei jede der zweidimensionalen Datenstrukturen verwendet wird, um Informationen über einen Fluss in einem Netzwerk zu speichern, der durch eine entsprechende Datenerfassungseinrichtung erlangt wird; und
eine Verarbeitungseinheit, die dazu konfiguriert ist, eine Kombinationsverarbeitung an den zweidimensionalen Datenstrukturen von der Vielzahl von Datenerfassungseinrichtungen durchzuführen,
um eine kombinierte zweidimensionale Datenstruktur zu erlangen; und einen Schwerfluss basierend auf der kombinierten zweidimensionalen Datenstruktur zu detektieren, wobei der Schwerfluss ein Schwerfluss einer netzwerkweiten Ebene in dem Netzwerk ist;
wobei die zweidimensionale Datenstruktur eine Datenstruktur ist, die durch eine Vielzahl von Buckets gebildet ist, und die Verarbeitungseinheit speziell zu Folgendem konfiguriert ist:

Durchführen einer Kombinationsverarbeitung an Buckets an einer gleichen Stelle in den zweidimensionalen Datenstrukturen in der Vielzahl von Datenerfassungseinrichtungen, um die kombinierte zweidimensionale Datenstruktur zu erlangen,
wobei jeder Bucket in den zweidimensionalen Datenstrukturen in der Vielzahl von Datenerfassungseinrichtungen eine Datenverkehrsflusssumme in dem aktuellen Bucket, einen Schlüsselwert eines Mehrheitsflusses in dem aktuellen Bucket und einen Zählerwert des Mehrheitsflusses umfasst;

und jeder Bucket in der kombinierten zweidimensionalen Datenstruktur eine aktualisierte Datenverkehrsflusssumme, einen Schlüsselwert eines aktualisierten Mehrheitsflusses und einen Zählerwert des aktualisierten Mehrheitsflusses umfasst, wobei jeder Bucket einen Bucket an einer ersten Stelle umfasst; und
die Verarbeitungseinheit speziell zu Folgendem konfiguriert ist:

Addieren der Datenverkehrsflusssummen in den Buckets an der ersten Stelle in den zweidimensionalen Datenstrukturen in der Vielzahl von Datenerfassungseinrichtungen, um die aktualisierte Datenverkehrsflusssumme in dem Bucket an der ersten Stelle zu erlangen;
Vergleichen von Verkehrsmengen der Mehrheitsflüsse in den Buckets an der ersten Stelle in den zweidimensionalen Datenstrukturen in der Vielzahl von Datenerfassungseinrichtungen, um den Schlüsselwert des aktualisierten Mehrheitsflusses in dem Bucket an der ersten Stelle zu erlangen; und
Erlangen des Zählerwerts des aktualisierten Mehrheitsflusses in dem Bucket an der ersten Stelle durch Verwendung des Schlüsselwerts des aktualisierten Mehrheitsflusses und einer Verkehrsmenge des Mehrheitsflusses.

**8.** Detektionsvorrichtung nach Anspruch 7, wobei die Erlangungseinheit speziell zu Folgendem konfiguriert ist:

Erlangen der zweidimensionalen Datenstrukturen in der Vielzahl von Datenerfassungseinrichtungen zu einem Endzeitpunkt jedes Zeitraums; und
die Verarbeitungseinheit speziell zu Folgendem konfiguriert ist:
wenn basierend auf der kombinierten zweidimensionalen Datenstruktur detektiert wird, dass ein Änderungswert eines ersten Flusses zwischen zwei beliebigen Zeiträumen größer als ein erster Schwellenwert ist, Bestimmen, dass der erste Fluss der Schwerfluss ist.

**9.** Detektionsvorrichtung nach Anspruch 7, wobei die Verarbeitungseinheit speziell zu Folgendem konfiguriert ist:
wenn basierend auf der kombinierten zweidimensionalen Datenstruktur detektiert wird, dass eine Gesamtverkehrsmenge eines ersten Flusses größer als ein zweiter Schwellenwert ist, Bestimmen, dass der erste Fluss der Schwerfluss ist.

10. Schwerflussdetektionsvorrichtung, umfassend:

einen Speicher, der dazu konfiguriert ist, ein Programm zu speichern; und
einen Prozessor, der dazu konfiguriert ist, das Programm, das in dem Speicher gespeichert ist, auszuführen, wobei, wenn das Programm durch den Prozessor ausgeführt wird, der Prozessor dazu konfiguriert ist, das Verfahren nach einem der Ansprüche 1 bis 6 durchzuführen.

11. Computerspeichermedium, wobei das Computerspeichermedium Programmcode speichert und der Programmcode eine Anweisung umfasst, die verwendet wird, um einen Schritt in dem Detektionsverfahren nach einem der Ansprüche 1 bis 6 durchzuführen.

**Revendications**

1. Procédé de détection pour flux à fort débit, comprenant :

l'obtention (310), par un appareil de détection, de structures de données bidimensionnelles à partir d'une pluralité de dispositifs de collecte de données, dans lequel chacune des structures de données bidimensionnelles est utilisée pour stocker des informations sur un flux dans un réseau qui sont obtenues par un dispositif de collecte de données correspondant ;
la réalisation (320), par l'appareil de détection, d'un traitement de combinaison sur les structures de données bidimensionnelles de la pluralité de dispositifs de collecte de données pour obtenir une structure de données bidimensionnelle combinée ; et
la détection (330), par l'appareil de détection, d'un flux à fort débit sur la base de la structure de données bidimensionnelle combinée, dans lequel le flux à fort débit est un flux à fort débit d'un niveau à l'échelle du réseau dans le réseau ;
dans lequel la structure de données bidimensionnelle est une structure de données formée par une pluralité de compartiments, et la réalisation, par l'appareil de détection, d'un traitement de combinaison sur les structures de données bidimensionnelles dans la pluralité de dispositifs de collecte de données pour obtenir une structure de données bidimensionnelle combinée comprend :

la réalisation, par l'appareil de détection, d'un traitement de combinaison de compartiments à un même emplacement dans les structures de données bidimensionnelles de la pluralité de dispositifs de collecte de données pour obtenir une structure de données bidimensionnelle combinée ;
dans lequel un quelconque compartiment dans les structures de données bidimensionnelles dans la pluralité de dispositifs de collecte de données comprend une somme de flux de trafic de données dans le compartiment actuel, une valeur clé d'un flux majoritaire dans le compartiment actuel et une valeur de compteur du flux majoritaire ; et un quelconque compartiment dans la structure de données bidimensionnelle combinée comprend une somme de flux de trafic de données mise à jour, une valeur clé d'un flux majoritaire mis à jour, et une valeur de compteur du flux majoritaire mis à jour, dans lequel un quelconque compartiment comprend un compartiment à un premier emplacement ; et
la réalisation, par l'appareil de détection, d'un traitement de combinaison sur les compartiments au même emplacement dans les structures de données bidimensionnelles de la pluralité de dispositifs de collecte de données pour obtenir une structure de données bidimensionnelle combinée comprend :

l'addition des sommes de flux de trafic de données dans les compartiments au premier emplacement dans les structures de données bidimensionnelles dans la pluralité de dispositifs de collecte de données pour obtenir la somme de flux de trafic de données mise à jour dans le compartiment au premier emplacement ;
la comparaison des volumes de trafic des flux majoritaires dans les compartiments au premier emplacement dans les structures de données bidimensionnelles dans la pluralité de dispositifs de collecte de données pour obtenir la valeur clé du flux majoritaire mis à jour dans le compartiment au premier emplacement ; et
l'obtention de la valeur du compteur du flux majoritaire mis à jour dans le compartiment au premier emplacement à l'aide de la valeur clé du flux majoritaire mis à jour et un volume de trafic du flux majoritaire.

2. Procédé de détection selon la revendication 1, dans lequel les structures de données bidimensionnelles de la pluralité de dispositifs de collecte de données sont N structures de données bidimensionnelles, et les valeurs clés des flux majoritaires correspondant aux compartiments au premier emplacement dans les N structures de données bidimensionnelles sont X valeurs clés, dans lequel X est un entier positif inférieur ou égal à N ; et

la comparaison des volumes de trafic des flux majoritaires dans les compartiments au premier emplacement dans les structures de données bidimensionnelles dans la pluralité de dispositifs de collecte de données pour obtenir la valeur clé du flux majoritaire mis à jour dans le compartiment au premier emplacement comprend :

la détermination que les volumes de trafic des flux majoritaires dans les compartiments au premier emplacement dans les N structures de données bidimensionnelles sont des valeurs estimées des volumes de trafic des flux correspondant à l'une quelconque des X valeurs clés ; et

la détermination qu'un flux ayant un volume de trafic maximal dans les flux correspondant à l'une quelconque des valeurs de clé X est le flux majoritaire mis à jour.

3. Procédé de détection selon la revendication 2, dans lequel une première valeur clé est l'une quelconque des X valeurs clés ; et une valeur estimée du volume de trafic du flux majoritaire dans le compartiment au premier emplacement d'une i-ième structure de données bidimensionnelle parmi les N structures de données bidimensionnelles est obtenue sur la base de la formule suivante :

si la valeur clé du flux majoritaire dans le compartiment au premier emplacement de la i-ième structure de données bidimensionnelle est la première valeur clé, une valeur estimée d'un volume de trafic d'un flux correspondant à la première valeur clé est $S_i(x)=(V_i+C_i)/2$; ou
si la valeur clé du flux majoritaire dans le compartiment au premier emplacement de la i-ième structure de données bidimensionnelle n'est pas la première valeur clé, une valeur estimée d'un volume de trafic d'un flux correspondant à la première valeur clé est $S_i(x)=(V_i-C_i)/2$; dans lequel
X représente la première valeur clé, et $V_i$ représente une somme de flux de trafic de tous les flux dans le compartiment au premier emplacement dans la i-ième structure de données bidimensionnelle ;
et $C_i$ représente la valeur du compteur du flux majoritaire dans le compartiment au premier emplacement dans la i-ième structure de données bidimensionnelle.

4. Procédé de détection selon l'une quelconque des revendications 1 à 3, dans lequel l'obtention, par un appareil de détection, de structures de données bidimensionnelles dans une pluralité de dispositifs de collecte de données comprend :

l'obtention, par l'appareil de détection, des structures de données bidimensionnelles dans la pluralité de dispositifs de collecte de données à un moment final de chaque période de temps ; et
la détection, par l'appareil de détection, d'un flux à fort débit basé sur la structure de données bidimensionnelle combinée comprend :
si l'appareil de détection détecte, sur la base de la structure de données bidimensionnelle combinée, qu'une valeur de changement d'un premier flux entre deux périodes de temps quelconques est supérieure à un premier seuil, la détermination du fait que le premier flux est un flux à fort débit.

5. Procédé de détection selon l'une quelconque des revendications 1 à 3, dans lequel la détection, par l'appareil de détection, d'un flux à fort débit sur la base de la structure de données bidimensionnelle combinée comprend :
si l'appareil de détection détecte, sur la base de la structure de données bidimensionnelle combinée, qu'un volume de trafic total d'un premier flux est supérieur à un second seuil, la détermination du fait que le premier flux est le flux à fort débit.

6. Procédé de détection selon l'une quelconque des revendications 1 à 5, dans lequel la structure de données bidimensionnelle comprend une structure de données de vote majoritaire, MV-Sketch.

7. Appareil de détection de flux à fort débit, comprenant :

une unité d'obtention, configurée pour obtenir des structures de données bidimensionnelles à partir d'une pluralité de dispositifs de collecte de données, dans lequel chacune des structures de données bidimensionnelles est utilisée pour stocker des informations sur un flux dans un réseau qui sont obtenues par un dispositif de collecte de données correspondant ; et
une unité de traitement, configurée pour réaliser un traitement de combinaison sur les structures de données bidimensionnelles à partir de la pluralité de dispositifs de collecte de données pour obtenir une structure de données bidimensionnelle combinée ; et détecter un flux à fort débit sur la base de la structure de données bidimensionnelle combinée, dans lequel le flux à fort débit est un flux à fort débit d'un niveau à l'échelle du réseau dans le réseau ;

dans lequel la structure de données bidimensionnelle est une structure de données formée par une pluralité de compartiments, et l'unité de traitement est spécifiquement configurée pour :

réaliser un traitement de combinaison de compartiments à un même emplacement dans les structures de données bidimensionnelles de la pluralité de dispositifs de collecte de données pour obtenir une structure de données bidimensionnelle combinée ;

dans lequel un quelconque compartiment dans les structures de données bidimensionnelles dans la pluralité de dispositifs de collecte de données comprend une somme de flux de trafic de données dans le compartiment actuel, une valeur clé d'un flux majoritaire dans le compartiment actuel et une valeur de compteur du flux majoritaire ; et un quelconque compartiment dans la structure de données bidimensionnelle combinée comprend une somme de flux de trafic de données mise à jour, une valeur clé d'un flux majoritaire mis à jour, et une valeur de compteur du flux majoritaire mis à jour, dans lequel un quelconque compartiment comprend un compartiment à un premier emplacement ; et

l'unité de traitement est spécifiquement configurée pour :

additionner des sommes de flux de trafic de données dans les compartiments au premier emplacement dans les structures de données bidimensionnelles dans la pluralité de dispositifs de collecte de données pour obtenir la somme de flux de trafic de données mise à jour dans le compartiment au premier emplacement ; comparer des volumes de trafic des flux majoritaires dans les compartiments au premier emplacement dans les structures de données bidimensionnelles dans la pluralité de dispositifs de collecte de données pour obtenir la valeur clé du flux majoritaire mis à jour dans le compartiment au premier emplacement ; et

obtenir la valeur du compteur du flux majoritaire mis à jour dans le compartiment au premier emplacement à l'aide de la valeur clé du flux majoritaire mis à jour et un volume de trafic du flux majoritaire.

8. Appareil de détection selon la revendication 7, dans lequel l'unité d'obtention est configurée spécifiquement pour :

obtenir des structures de données bidimensionnelles dans la pluralité de dispositifs de collecte de données à un moment final de chaque période de temps ; et
l'unité de traitement est spécifiquement configurée pour :
s'il est détecté, sur la base de la structure de données bidimensionnelle combinée, qu'une valeur de changement d'un premier flux entre deux périodes de temps quelconques est supérieure à un premier seuil, déterminer le fait que le premier flux est le flux à fort débit.

9. Appareil de détection selon la revendication 7, dans lequel l'unité de traitement est configurée spécifiquement pour :
s'il est détecté, sur la base de la structure de données bidimensionnelle combinée, qu'un volume de trafic total d'un premier flux est supérieur à un second seuil, déterminer le fait que le premier flux est le flux à fort débit.

10. Appareil de détection de flux à fort débit, comprenant :

une mémoire, configurée pour stocker un programme ; et
un processeur, configuré pour exécuter le programme stocké dans la mémoire, dans lequel lorsque le programme stocké dans la mémoire est exécuté, le processeur est configuré pour réaliser le procédé de détection selon l'une quelconque des revendications 1 à 6.

11. Support de stockage lisible par ordinateur, dans lequel le support de stockage lisible par ordinateur stocke un code de programme et le code de programme comprend une instruction utilisée pour réaliser une étape dans le procédé de détection selon l'une quelconque des revendications 1 à 6.

Bucket B(i, j)

| $V_{i,j}$ | $K_{i,j}$ | $C_{i,j}$ |
|---|---|---|

d rows

w buckets (buckets)

FIG. 1

100

101

102

102

102

102

FIG. 2

| Flow collection module 210 | → | Flow processing module 220 | → | Flow exception detection module 230 |
|---|---|---|---|---|

| Local update module 221 | → | Global combination module 222 | → | Flow estimation module 223 |
|---|---|---|---|---|

FIG. 3

300

| A control device obtains two-dimensional data structures in a plurality of data collection devices, where the two-dimensional data structures each are used to store information about a flow in a network that is obtained by a corresponding data collection device | 310 |

| The control device performs combination processing on the two-dimensional data structures in the plurality of data collection devices to obtain a combined two-dimensional data structure | 320 |

| The control device detects a heavy flow based on the two-dimensional data structure obtained after the combination processing, where the heavy flow is a heavy flow of a network-wide level in the network | 330 |

FIG. 4

```
        ┌──────────────────┐  ┌─ S401
        │      Start        │
        └──────────────────┘
                 │
                 ▼
        ┌──────────────────┐  ┌─ S402
        │   Collect a flow  │
        └──────────────────┘
                 │
                 ▼
        ┌──────────────────┐  ┌─ S403
        │ Update a two-dimensional
        │ data structure locally
        └──────────────────┘
                 │
                 ▼
        ┌──────────────────┐  ┌─ S404
        │ Combine a plurality of
        │ two-dimensional data
        │ structures globally
        └──────────────────┘
                 │
                 ▼
        ┌──────────────────┐  ┌─ S405
        │ Estimate a size of the flow
        └──────────────────┘
                 │
                 ▼
        ┌──────────────────┐  ┌─ S406
        │ Perform abnormal-flow
        │ detection
        └──────────────────┘
                 │
                 ▼
        ┌──────────────────┐  ┌─ S407
        │       End         │
        └──────────────────┘
```

FIG. 5

Control device

FIG. 6

◇ CM ◯ DEL △ FAST ▢ LD ▽ MV

(a) Precision

(b) Recall

(c) F1 score

(d) Error

FIG. 7

◇ CM ◯ DEL △ FAST ▢ LD ▽ MV

(a) Precision

(b) Recall

(c) F1 score

(d) Error

FIG. 8

Detection apparatus 500

Obtaining unit 510

Processing unit 520

FIG. 9

Detection apparatus 600

Memory 601

Processor 602

Bus 604

Communications
interface 603

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020019270 A1